(19) Europäisches Patentamt / European Patent Office / Office européen des brevets

(11) **EP 3 989 458 A1**

(12) **EUROPEAN PATENT APPLICATION**

(43) Date of publication:
**27.04.2022 Bulletin 2022/17**

(21) Application number: **20203142.3**

(22) Date of filing: **21.10.2020**

(51) International Patent Classification (IPC):
**H04B 7/06** (2006.01)     **H04B 7/08** (2006.01)
**H04L 5/00** (2006.01)

(52) Cooperative Patent Classification (CPC):
**H04B 7/0617; H04B 7/0695; H04B 7/088;**
H04L 5/001; H04L 5/0048

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fraunhofer-Gesellschaft zur Förderung
der angewandten Forschung e.V.
80686 München (DE)**

(72) Inventors:
• **Grossmann, Marcus
  91058 Erlangen (DE)**
• **Varatharaajan, Sutharshun
  91058 Erlangen (DE)**

(74) Representative: **Groth & Co. KB
P.O. Box 6107
102 32 Stockholm (SE)**

(54) **COMMON AND DEFAULT BEAM INDICATION OF UPLINK AND DOWNLINK CHANNEL RESOURCES AND/OR REFERENCE SIGNALS**

(57)     The embodiments of the present disclosure relate to methods and apparatuses for signaling framework for flexible beam management in a wireless communications network. A method performed by a UE (300) comprises: deriving or obtaining (201B), from one or more QCL setting(s) and/or spatial filter(s) or spatial relation(s) and/or pathloss reference(s) configured or known to the UE (300), one or more transmit setting(s) for the transmission of one or more UL channel(s) and/or resource(s) and one or more receive setting(s) for the reception of one DL channel(s) and/or resource(s) in one or more Carrier Components (CC(s)); and applying (202B) the derived or obtained setting(s) for the reception of said one or more DL channel(s) and/or resource(s) and for the transmission of said one or more UL channel(s) and/or resource(s)

Figure 1

EP 3 989 458 A1

## Description

### TECHNICAL FIELD

The present disclosure relates to the field of wireless communications, and in particular to methods and apparatuses for signaling framework for flexible beam management in a wireless communications network such as advanced 5G networks.

### BACKGROUND

The fifth generation (5G) mobile communications system also known as new radio (NR) provides a higher level of performance than the previous generations of mobile communications system. 5G mobile communications has been driven by the need to provide ubiquitous connectivity for applications as diverse automotive communication, remote control with feedback, video downloads, as well as data applications for Internet-of-Things (IoT) devices, machine type communication (MTC) devices, etc. 5G wireless technology brings several main benefits, such as faster speed, shorter delays and increased connectivity. The third-generation partnership project (3GPP) provides the complete system specification for the 5G network architecture, which includes at least a radio access network (RAN), core transport networks (CN) and service capabilities.

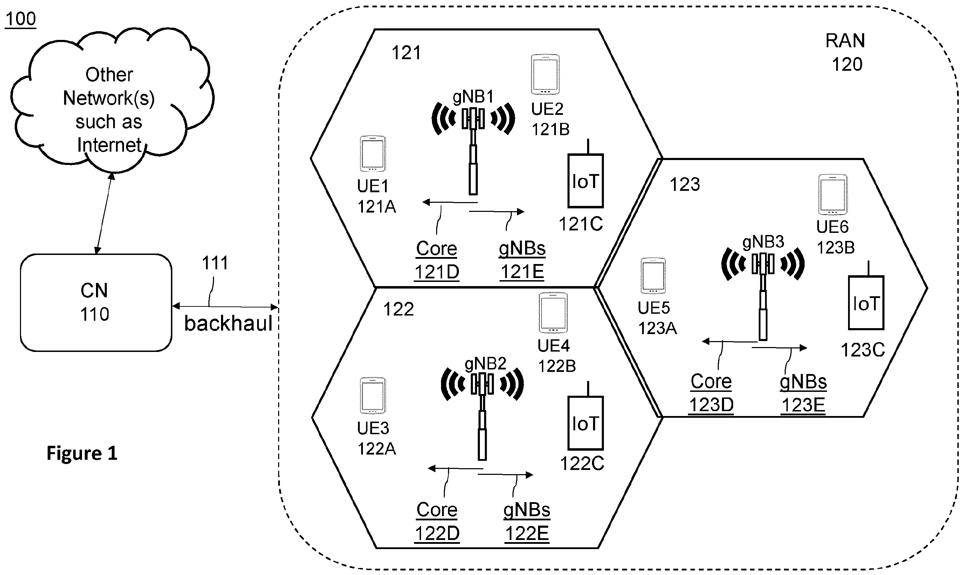

**Figure 1** illustrates a simplified schematic view of an example of a wireless communications network 100 including a core network (CN) 110 and a radio access network (RAN) 120. The RAN 120 is shown including a plurality of network nodes or radio base stations, which in 5G are called gNBs. Three radio base stations are depicted gNB1, gNB2 and gNB3. Each gNB serves an area called a coverage area or a cell. Figure 1 illustrates 3 cells 121, 122 and 123, each served by its own gNB, gNB1, gNB2 and gNB3, respectively. It should be mentioned that the network 100 may include any number of cells and gNBs. The radio base stations, or network nodes serve users within a cell. In 4G or LTE, a radio base station is called an eNB, in 3G or UMTS, a radio base station is called an eNodeB, and BS in other radio access technologies. A user or a user equipment (UE) may be a wireless or a mobile terminal device or a stationary communication device. A mobile terminal device or a UE may also be an IoT device, an MTC device, etc. IoT devices may include wireless sensors, software, actuators, and computer devices. They can be imbedded into mobile devices, motor vehicle, industrial equipment, environmental sensors, medical devices, aerial vehicles and more, as well as network connectivity that enables these devices to collect and exchange data across an existing network infrastructure. Referring back to Figure 1, each cell is shown including UEs and IoT devices. gNB1 in cell 121 serves UE1 121A, UE2 121B and IoT device 121C. Similarly, gNB2 in cell 121 serves UE3 122A, UE4 122B and IoT device 122C, and gNB3 in cell 123 serves UE5 123A, UE6 123B and IoT device 123C. The network 100 may include any number of UEs and IoT devices or any other types of devices. The devices communicate with the serving gNB(s) in the uplink and the gNB(s) communicate with the devices in the downlink. The respective base station gNB1 to gNB3 may be connected to the CN 120, e.g. via the S1 interface, via respective backhaul links 111, 121D, 122D, 123D, which are schematically depicted in Fig. 1 by the arrows pointing to "core". The core network 120 may be connected to one or more external networks, such as the Internet. The gNBs may be connected to each other via the S1 interface or the X2 interface or the XN interface in 5G, via respective interface links 121E, 122E and 123E, which is depicted in the figure by the arrows pointing to gNBs.

For data transmission, a physical resource grid may be used. The physical resource grid may comprise a set of resource elements (REs) to which various physical channels and physical signals are mapped. For example, the physical channels may include the physical downlink, uplink and/or sidelink (SL) shared channels (PDSCH, PUSCH, PSSCH) carrying user specific data, also referred to as downlink, uplink or sidelink payload data, the physical broadcast channel (PBCH) carrying for example a master information block (MIB) and a system information block (SIB), the physical downlink, uplink and/or sidelink control channels (PDCCH, PUCCH, PSCCH) carrying for example the downlink control information (DCI), the uplink control information (UCI) or the sidelink control information (SCI). For the uplink, the physical channels may further include the physical random-access channel (PRACH or RACH) used by UEs for accessing the network once a UE is synchronized and obtains the MIB and SIB. The physical signals may comprise reference signals (RS), synchronization signals (SSs) and the like. The resource grid may comprise a frame or radio frame having a certain duration, like 10 milliseconds, in the time domain and having a given bandwidth in the frequency domain. The radio frame may have a certain number of subframes of a predefined length, e.g., 2 subframes with a length of 1 millisecond. Each subframe may include two slots of a number of OFDM symbols depending on the cyclic prefix (CP) length. IN 5G, each slot consists of 14 OFDM symbols or 12 OFDM symbols based on normal CP and extended CP respectively. A frame may also consist of a smaller number of OFDM symbols, e.g. when utilizing shortened transmission time intervals (TTIs) or a mini-slot/non-slot-based frame structure comprising just a few OFDM symbols. Slot aggregation is supported in 5G NR and hence data transmission can be scheduled to span one or multiple slots. Slot format indication informs a UE whether an OFDM symbol is downlink, uplink or flexible.

The wireless communication network system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR (New Radio) standard.

The wireless communications network system depicted in Figure 1 may be a heterogeneous network having two distinct overlaid networks, a network of macro cells with each macro cell including a macro base station, like base station gNB1 to gNB3, and a network of small cell base stations (not shown in Figure 1), like femto- or pico-base stations. In addition to the above described wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Figure 1, for example in accordance with the LTE-advanced pro standard or the 5G or NR, standard.

In 3GPP NR i.e. 5G, and its further releases [1 - 6], downlink (DL) channel state information (CSI) reporting by a UE to a network node (for e.g., a gNodeB, gNB) aids the scheduling of the physical downlink shared channel (PDSCH). Downlink reference signals (RSs) such as the channel state information reference signal (CSI-RS) and the synchronization signal/physical broadcast channel (SS/PBCH) block (SSB), which can be referred to as CSI resources, are used to evaluate the link between the UE and the network node, and the UE provides CSI feedback to the network node on the physical uplink control channel (PUCCH) or the physical uplink shared channel (PUSCH), wherein the CSI is obtained from measurements of the reference signals.

In millimeter wave (mmWave) frequencies (frequency range 2 (FR2)), i.e., frequencies above 6 GHz, in general, wireless communication between communication devices is performed with spatially selective/directive transmissions and receptions called beams. Therefore, beam management is a required framework for link establishment, adaptation, and recovery at FR2.

In the 3GPP Rel. 16, beam management in UL is handled separately for various UL channels and UL reference signals. The functionalities of the UL beam management framework are spread over three communication layers - the physical (PHY) layer [1 - 4], the medium access control (MAC) layer [5] and the Radio Resource Control (RRC) layer [6]. In order to enable a beamformed uplink transmission between a UE and a radio network node (e.g. gNB), the beam management performs two tasks: Indication of the beam direction for the UL transmission, and indication of the transmit power settings associated with it. The two tasks are handled in different ways for the PUSCH, the PUCCH and the sounding reference signal (SRS).

On the other hand, in the downlink (DL), the UE must be given directives to derive various parameters such as delay spread, average delay, Doppler and Receiver (Rx) beam direction for the reception of a DL channel or reference signal (RS).

The term 'beam' is used in the following to denote a spatially selective/directive transmission of an outgoing signal or reception of an incoming signal which is achieved by precoding/filtering the signal at the antenna ports of the device with a particular set of coefficients. The words precoding or filtering may refer to processing of the signal in the analog or digital domain. The set of coefficients used to spatially direct a transmission/reception in a certain direction may differ from one direction to another direction. The term 'Tx beam' denotes a spatially selective/directive transmission and the term 'Rx beam' denotes a spatially selective/directive reception. The set of coefficients used to precode/filter the transmission or reception is denoted by the term 'spatial filter'. The term 'spatial filter' is used interchangeably with the term 'beam direction' in this document as the spatial filter coefficients determine the direction in which a transmission/reception is spatially directed to.

In case of the UE, the 'spatial relation' for an UL channel 'Uc' or RS 'Ur' with respect to or with reference to a DL or UL RS 'R' means that the UE uses the spatial filter used to receive or transmit the RS 'R' to transmit the UL channel 'Uc' or RS 'Ur', or it means that the UE uses the spatial filter used to receive or transmit the RS 'R' as a reference to determine the spatial filter used to transmit the UL channel 'Uc' or RS 'Ur'.

The term 'higher layer' in the following, when used in isolation, denotes any communication layer above the physical layer in the protocol stack.

The term serving cell and carrier component (CC) may be used interchangeably in this disclosure as a serving cell configured for a UE and is usually a separate physical carrier centered around a particular carrier frequency. Depending on the frequency of a component carrier/serving cell, the size of the cell and the beamformed reference signals may vary.

In the following, the state of the art (SoTA) for UL and DL beam management, pathloss reference signals (RSs) and power control in 3GPP is discussed. This is followed by a short description of the deficiencies in the current framework of the same along with solutions to address them.

**Downlink Transmission Configuration Indication (DL-TCI)**

The physical downlink control channel (PDCCH) and the physical downlink shared channel (PDSCH) carry DL control information (DCI) and DL data, respectively, to a UE [1 - 6].

Demodulation reference signals (DMRS) are embedded for the coherent demodulation of the PDCCH/PDSCH at the UE. The DMRS consists of a set of DMRS ports. The number of DMRS ports determines the number of transmission layers contained in a PDSCH. DMRS is used for channel estimation at the UE to coherently demodulate the PDSCH or PDCCH(s). In the case of PDCCH, one or more of them may be transmitted on a CORESET. Therefore, the DMRS for the coherent demodulation of the PDCCH(s) on the Control Resource Set (CORESET) may be embedded across the PDCCH(s) transmitted on the CORESET.

A parameter in the transmission of the PDCCH and the PDSCH is the Transmission Configuration Indication'-state (TCI-state) [4]. In 3GPP Rel. 16, the indication of how the control or the shared channel is transmitted by the gNB and what assumptions the UE must consider while receiving them, is done via reference signals (RSs). The indication to the UE is performed using a TCI-state information element (IE) configured via RRC. A TCI-state IE, among others, consists of the following elements:

- One of more reference signal(s), and
- for each reference signal, one or more quasi-colocation (QCL) assumptions.

The TCI-state is used to mention or indicate how to receive a PDSCH or the PDCCH(s) transmitted on a CORESET. Applying a TCI-state to a PDSCH or CORESET implies that the DMRS ports of the PDSCH or the DMRS ports of the PDCCH(s), transmitted on the CORESET, shall be assumed to be quasi-co-located with the reference signals mentioned or indicated in the TCI-state.

Assuming 'quasi-colocation' means that certain channel parameters such as Doppler shift/spread, delay spread, average delay and/or Tx beam direction are assumed to be the same for the RS mentioned in the TCI-state and the DMRS ports of the PDSCH, or the DMRS ports of the PDCCH(s) transmitted on the CORESET. Four different QCL types can be indicated in 3GPP Rel. 16 [4].

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

One or more of the QCL-Info parameter(s) is/are included in the TCI-state IE to provide the QCL assumption(s) associated with the TCI-state.

For example, a TCI-state IE comprising a DL reference signal (RS) 'A' with QCL assumption 'QCL-typeA' and a DL RS 'B' with QCL-assumption 'QCL-TypeD' is considered. Applying this TCI-state to a PDSCH or CORESET with the given quasi-colocation assumptions means that the UE may assume the same Doppler shift, Doppler spread, average delay and delay spread for the PDSCH or the PDCCH(s) transmitted on the CORESET and DL RS A, and the UE may use the same spatial filter to receive the DL RS 'B' and the PDSCH or the PDCCH(s) transmitted on the CORESET, or the Rx spatial filter to receive the PDCCH(s) on the CORESET or the PDSCH may be obtained from or be similar to that used for the reception of the DL RS 'B'.

Usually, the TCI state that is used to schedule a PDCCH or a PDSCH contains the identifiers (IDs) of channel state information reference signals (CSI-RS) or synchronization signal blocks (SSB) along with the QCL assumptions for the reference signal. The RS in the TCI-state is usually a RS that the UE has measured before, so that it can use it as a reference to receive the DMRS of the PDCCH or PDSCH, and hence demodulate the same. The indication of a TCI-state for a CORESET or a PDSCH is performed via Medium Access Control-Control Element (MAC-CE) messages or using the TCI-indication field or the TCI field in the downlink control information (DCI) used to schedule the PDSCH. If a PDSCH is scheduled by a DCI without a TCI field, the TCI state of the PDSCH follows that of the CORESET on which the DCI that schedules the PDSCH was received.

In FR2, where the gNB and UE establish a connection via spatially selective/directive beams, the TCI-state is used to indicate the Rx beams in which the UE may receive, i.e., the spatial filter that may be used by the UE to receive a PDSCH/PDCCH(s) via a 'qcl-TypeD' assumption with a CSI-RS or an SSB that the UE has received. The determination of the DL Tx beam to transmit PDCCH(s)/PDSCH is performed via a beam sweeping procedure by the network node (e.g., the gNB). In a beam sweeping procedure, the gNB configures a set of DL RSs (CSI-RS or SSB) via RRC for the UE to measure the set of DL RSs. Each of the configured DL RS may be transmitted with a different spatial filter, i.e., each of the configured DL RS may be transmitted in a different direction by the gNB. The UE measures each of the configured DL RS by receiving them using one or more spatial filters - the RSs may all be received with the same spatial filter or a different spatial filter may be used to receive each RS. Following the measurements, the UE sends a beam report to the gNB. The beam report comprises the indices of $1 \leq L \leq 4$ configured DL RSs (essentially, L DL Tx beam directions, with each beam direction resulting from the use of a specific spatial filter at the gNB) along with the received power in each of the RSs [4]. With the help of the beam report, the gNB determines one or more suitable DL Tx beam direction(s), i.e., spatial filter(s) for the transmission of the PDCCH(s) and the PDSCH.

**Physical Uplink Shared Channel (PUSCH)**

The PUSCH transmission(s) from a UE can be dynamically scheduled by a network node via an UL grant indicated in the PDCCH or semi-persistently/statically scheduled with the higher layer configured grant *configuredGrant-Config*. The configured grant Type 1 PUSCH transmission is semi-statically configured to operate upon the reception of a higher layer parameter of *configuredGrantConfig* including *rrc-ConfiguredUplinkGrant* without the detection of an UL grant in the PDCCH. The configured grant Type 2 PUSCH transmission is semi-persistently scheduled by an UL grant in a valid activation PDCCH [3] after the reception of the higher layer parameter *configuredGrantConfig* not including *rrc-ConfiguredUplinkGrant* [4].

The higher layer configurations of the PUSCH and the configuredGrantConfig according to the New Radio (NR) specifications [6] are shown in the following configurations:

Higher Layer configuration of the PUSCH (SoTA)

```
PUSCH-Config ::=                        SEQUENCE {
    dataScramblingIdentityPUSCH             INTEGER (0..1023)                                            OPTIONAL,   -- Need S
    txConfig                                ENUMERATED {codebook, nonCodebook}                           OPTIONAL,   -- Need S
    dmrs-UplinkForPUSCH-MappingTypeA        SetupRelease { DMRS-UplinkConfig }                           OPTIONAL,   -- Need M
    dmrs-UplinkForPUSCH-MappingTypeB        SetupRelease { DMRS-UplinkConfig }                           OPTIONAL,   -- Need M
    pusch-PowerControl                      PUSCH-PowerControl                                           OPTIONAL,   -- Need M
    frequencyHopping                        ENUMERATED {intraSlot, interSlot}                            OPTIONAL,   -- Need S
    frequencyHoppingOffsetLists             SEQUENCE (SIZE (1..4)) OF INTEGER (1.. maxNrofPhysicalResourceBlocks-1)
                                                                                                         OPTIONAL,   -- Need M
    resourceAllocation                      ENUMERATED { resourceAllocationType0, resourceAllocationType1, dynamicSwitch},
    pusch-TimeDomainAllocationList          SetupRelease { PUSCH-TimeDomainResourceAllocationList }      OPTIONAL,   -- Need M
    pusch-AggregationFactor                 ENUMERATED { n2, n4, n8 }                                    OPTIONAL,   -- Need S
    mcs-Table                               ENUMERATED {qam256, qam64LowSE}                              OPTIONAL,   -- Need S
    mcs-TableTransformPrecoder              ENUMERATED {qam256, qam64LowSE}                              OPTIONAL,   -- Need S
    transformPrecoder                       ENUMERATED {enabled, disabled}                               OPTIONAL,   -- Need S
    codebookSubset                          ENUMERATED {fullyAndPartialAndNonCoherent, partialAndNonCoherent,nonCoherent}
                                                                                                         OPTIONAL, -- Cond codebookBased
    maxRank                                 INTEGER (1..4)                                               OPTIONAL, -- Cond codebookBased
    rbg-Size                                ENUMERATED { config2}                                        OPTIONAL, -- Need S
    uci-OnPUSCH                             SetupRelease { UCI-OnPUSCH}                                   OPTIONAL, -- Need M
    tp-pi2BPSK                              ENUMERATED {enabled}                                         OPTIONAL, -- Need S
    ...
}
```

Higher configuration of *configuredGrantConfig* (SoTA)

```
ConfiguredGrantConfig ::=          SEQUENCE {
      frequencyHopping             ENUMERATED {intraSlot, interSlot}                                        OPTIONAL,    -- Need S
      cg-DMRS-Configuration        DMRS-UplinkConfig,
      mcs-Table                    ENUMERATED {qam256, qam64LowSE}                                          OPTIONAL,    -- Need S
      mcs-TableTransformPrecoder   ENUMERATED {qam256, qam64LowSE}                                          OPTIONAL,    -- Need S
      uci-OnPUSCH                  SetupRelease { CG-UCI-OnPUSCH }                                          OPTIONAL,    -- Need M
      resourceAllocation           ENUMERATED { resourceAllocationType0, resourceAllocationType1, dynamicSwitch },
      rbg-Size                     ENUMERATED {config2}                                                     OPTIONAL,    -- Need S
      powerControlLoopToUse        ENUMERATED {n0, n1},
      p0-PUSCH-Alpha               P0-PUSCH-AlphaSetId,
      transformPrecoder            ENUMERATED {enabled, disabled}                                           OPTIONAL,    -- Need S
      nrofHARQ-Processes           INTEGER(1..16),
      repK                         ENUMERATED {n1, n2, n4, n8},
      repK-RV                      ENUMERATED {s1-0231, s2-0303, s3-0000}                                   OPTIONAL,    -- Need R
      periodicity                  ENUMERATED {
                                      sym2, sym7, sym1x14, sym2x14, sym4x14, sym5x14, sym8x14, sym10x14, sym16x14, sym20x14,
                                      sym32x14, sym40x14, sym64x14, sym80x14, sym128x14, sym160x14, sym256x14, sym320x14, sym512x14,
                                      sym640x14, sym1024x14, sym1280x14, sym2560x14, sym5120x14,
                                      sym6, sym1x12, sym2x12, sym4x12, sym5x12, sym8x12, sym10x12, sym16x12, sym20x12, sym32x12,
                                      sym40x12, sym64x12, sym80x12, sym128x12, sym160x12, sym256x12, sym320x12, sym512x12, sym640x12,
                                      sym1280x12, sym2560x12
                                   },
      configuredGrantTimer         INTEGER {1..64}                                                         OPTIONAL,    -- Need R
      rrc-ConfiguredUplinkGrant    SEQUENCE {
         timeDomainOffset             INTEGER {0..5119},
         timeDomainAllocation         INTEGER  {0..15},
         frequencyDomainAllocation    BIT STRING {SIZE(18)},
         antennaPort                  INTEGER {0..31},
         dmrs-SeqInitialization       INTEGER {0..1}                                                       OPTIONAL,    -- Need R
         precodingAndNumberOfLayers   INTEGER {0..63},
         srs-ResourceIndicator        INTEGER {0..15}                                                      OPTIONAL,    -- Need R
         mcsAndTBS                    INTEGER {0..31},
         frequencyHoppingOffset       INTEGER {1.. maxNrofPhysicalResourceBlocks-1}                        OPTIONAL,    -- Need R
         pathlossReferenceIndex       INTEGER {0..maxNrofPUSCH-PathlossReferenceRSs-1},
         ...,
         [[
         pusch-RepTypeIndicator-r16       ENUMERATED {pusch-RepTypeA,pusch-RepTypeB}                        OPTIONAL,    -- Need M
         frequencyHoppingPUSCH-RepTypeB-r16  ENUMERATED {interRepetition, interSlot}                        OPTIONAL,    -- Cond RepTypeB
         timeReferenceSFN-r16             ENUMERATED {sfn512}                                               OPTIONAL     -- Need S
         ]]
      }                                                                                                    OPTIONAL,    -- Need R
      ...,
}
```

The mode of transmission of the PUSCH is determined by the higher layer parameter 'txConfig'. The parameter can be set to either 'codebook' or 'nonCodebook' or it may not be configured. When the PUSCH is scheduled via the PDCCH, two different downlink control information (DCI) formats may be used in the scheduling-PDCCH - DCI format 0_0 or DCI format 0_1. The codebook- and non-codebook-based PUSCH transmissions are scheduled using DCI format 0_1 [4], when scheduled via the PDCCH. When scheduling the PUSCH using DCI format 0_1, the gNB indicates the ports from which the UE has to transmit via the SRS resource indicator (SRI). The SRI field in DCI format 0_1 indicates one or more SRS resource(s) from a codebook or non-codebook SRS resource set, which means that the UE must transmit the PUSCH via the SRS ports associated with the SRS resources indicated via the SRI.

In the case of codebook-based-PUSCH, the precoding of the ports for the PUSCH transmission is indicated via the scheduling PDCCH. In the non-codebook case, the precoding of the ports for the PUSCH transmission is either predetermined or left for UE implementation [1 - 4]. It is also possible that the PUSCH scheduled via a PDCCH using DCI format 0_1 may not contain an SRI field - it happens when the SRS resource set that the SRI uses to indicate the ports to transmit the PUSCH from contains only one SRS resource. For a codebook or non-codebook-based PUSCH scheduled via a higher layer grant, the SRI is indicated by the scheduling grant, when applicable. When 'txConfig' is not configured, the UE does not expect the PUSCH to be scheduled using DCI format 0_1. When the PUSCH is scheduled with DCI format 0_0, the UE uses a single port for the PUSCH transmission [4].

The beam direction or spatial relation of the PUSCH is determined from the beam direction/spatial relation of an SRS or a PUCCH resource depending on the mode of PUSCH transmission:

- Codebook- or non-codebook-based PUSCH transmission is indicated with an SRS resource. The UE sounds the UL channel with SRS resources (which are configured specifically for the codebook/non-codebook transmission mode) and the gNB, in return, schedules the PUSCH via the indication of an SRS resource. The UE, thereby, transmits the PUSCH from the same ports from which the SRS resource was transmitted and uses the same beam direction/spatial relation for the transmission of the PUSCH as for the transmission of the SRS resource.
- When the UE is scheduled by DCI format 0_0 (single-port PUSCH), the spatial relation used for the transmission of the PUSCH is the same as that used for the transmission of the PUCCH resource with the lowest ID in the currently active UL bandwidth part (BWP).

The pathloss reference RS, which is configured/indicated via a higher layer, is used in the power control settings of the PUSCH to determine the pathloss estimate for the transmission of the PUSCH [3]. The pathloss reference RS for the PUSCH is determined in different ways for different modes of PUSCH transmission. The PUSCH is configured with a list of pathloss reference RSs in 'PUSCH-PathlossReferenceRS' IEs and in most cases, it uses the list to obtain the pathloss reference RS.

- For codebook- or non-codebook-based PUSCH transmission scheduled by the PDCCH, the pathloss reference RS is configured in 'SRI-PUSCH-PowerControl' IEs [6]. As previously presented, SRI stands for SRS Resource Indicator. These IEs contain the power control settings for the PUSCH such as the ID of a PUSCH-pathlossReferenceRS, 'alpha' values (pathloss compensation factor) and the closed loop power control index. The mapping between the PUSCH-pathlossReferenceRS IEs and the SRI-PUSCH-PowerControl IEs can be modified using Medium Access Control-Control Element (MAC-CE) messages [3]. The SRS resource indicator (SRI) mentioned for the codebook/non-codebook PUSCH transmission maps to a 'SRI-PUSCH-PowerControl' IE that provides these power control settings. When there is no SRI field in the scheduling PDCCH, the UE uses the SRI-PUSCH-PowerControl whose ID value is set to 0.
- For single-port PUSCH (scheduled by the PDCCH via DCI format 0_0), the pathloss reference RS is obtained from the same PUCCH resource that it obtains the spatial relation from.
- When the PUSCH is scheduled by a higher layer grant, the pathloss reference RS to be used is indicated via a pathlossReferenceIndex that points to a PUSCH-pathlossReferenceRS IE or is obtained from the SRI-PUSCH-PowerControl whose ID value is set to 0 when there is no SRS resource indicator field.

The transmit power of PUSCH is thereby determined from a combination of open loop and closed loop power control parameters. If a UE transmits a PUSCH on active UL BWP $b$ of carrier $f$ of serving cell $c$ using parameter set configuration with index $j$ and PUSCH power control adjustment state with index $l$, the UE determines the PUSCH transmission power in PUSCH transmission occasion $i$ as:

$$P_{\mathsf{PUSCH},b,f,c}(i,j,q_d,l) =$$

$$\min\begin{Bmatrix} P_{\mathsf{CMAX},f,c}(i), \\ P_{\mathsf{O\_PUSCH},b,f,c}(j) + 10\,log_{10}(2^{\mu} \cdot M_{\mathsf{RB},b,f,c}^{\mathsf{PUSCH}}(i)) + \alpha_{b,f,c}(j) \cdot PL_{b,f,c}(q_d) + \Delta_{\mathsf{TF},b,f,c}(i) + f_{b,f,c}(i,l) \end{Bmatrix}[\mathsf{dBm}]$$

where,

- $P_{\mathsf{CMAX},f,c}(i)$ is the configured maximum UE transmit power defined in [7] and [8].
- $P_{\mathsf{O\_PUSCH},b,f,c}(j)$ is a parameter composed of the sum of the nominal PUSCH transmission power $P_{\mathsf{O\ NOMINAL\ PUSCH},f,c}(j)$ and $P_{\mathsf{O\_UE\_PUSCH},b,f,c}(j)$ both of which are configured via a higher layer by the gNB [3].
- $M_{\mathsf{RB},b,f,c}^{\mathsf{PUSCH}}(i)$ is the bandwidth of the PUSCH resource assignment expressed in number of resource blocks.
- $PL_{b,f,c}(q_d)$ is a downlink pathloss estimate in dB calculated by the UE using DL reference signal (RS) index $q_d$. The configuration/indication of the pathloss reference RS is as described above.
- $\alpha_{b,f,c}(j)$ is a pathloss compensation factor configured via higher layer by the gNB.
- $f_{b,j,c}(i,l)$ is a closed loop power correction function that changes depending on the transmit power control (TPC) feedback from the network node or gNB.
- $\Delta_{\mathsf{TF},b,f,c}(i)$ is a power offset value dependent on the modulation and coding scheme (MCS) used for the PUSCH.

In 3GPP Rel. 16, default spatial relations and pathloss reference RS assumptions were defined for UL channels/RSs, i.e., the 3GPP specification provides directives to identify the spatial relation and pathloss reference RS of an UL channel/RS in case they are not explicitly configured or indicated. In scenarios where beamformed transmissions are used (common in frequency range 2), the pathloss reference and the spatial relation may be derived from a downlink channel. This means the DL RS used as a reference to obtain the beam direction for receiving a DL channel (e.g., indicated via the TCI state) at the UE may be used as a reference to derive the spatial relation for an UL channel or UL RS and used in the calculation of the pathloss estimate for the Tx power calculation of the UL transmission.

Defining default spatial relations and pathloss reference RSs helps the network to avoid explicit indication of the parameters, especially in FR2 deployments, thereby reducing control information overhead and latency. In the case of PUSCH, the default assumptions in 3GPP Rel. 16 are obtained from a CORESET or from PUCCH resources configured on the CC (Component Carrier), depending on whether there are PUCCH resources configured on the CC or not [3], [4].

**Sounding Reference Signal (SRS)**

Sounding Reference Signals (SRSs), as the name suggests, are used for sounding the UL channel. The basic unit of the SRS is an SRS resource. An SRS resource is a specific pattern of reference symbols in time, frequency and code transmitted by all or a subset of UE's antenna ports in the UL to sound the UL channel. The UE is configured by the gNB via the RRC with one or more SRS resource sets, with each SRS resource set consisting of one or more SRS resources. The RRC information elements (IEs) that configure the SRS resource, SRS resource set and the SRS-SpatialRelationInfo are shown below [6].

As indicated in the SRS resource set configuration provided in below, the parameter 'usage' indicates the purpose for which the SRS is used:

1) Usage = 'codebook': to sound the UL channel before a codebook-based-PUSCH transmission.
2) Usage = 'non-codebook': to sound the UL channel before a non-codebook-based-PUSCH transmission.
3) Usage = 'beamManagement': to sound the UL channel with beamformed SRS resources to identify suitable UL beams.
4) Usage = 'antennaSwitching': to sound the UL channel to obtain DL channel information.

SRS resource set configuration

```
SRS-ResourceSet ::=                     SEQUENCE {
    srs-ResourceSetId                   SRS-ResourceSetId,
    srs-ResourceIdList                  SEQUENCE (SIZE(1..maxNrofSRS-ResourcesPerSet)) OF SRS-ResourceId        OPTIONAL, -- Cond Setup
    resourceType                        CHOICE {
        aperiodic                       SEQUENCE {
            aperiodicSRS-ResourceTrigger    INTEGER (1..maxNrofSRS-TriggerStates-1),
            csi-RS                          NZP-CSI-RS-ResourceId                                OPTIONAL, -- Cond NonCodebook
            slotOffset                      INTEGER (1..32)                                      OPTIONAL, -- Need S
            ...,
            [[
            aperiodicSRS-ResourceTriggerList    SEQUENCE (SIZE(1..maxNrofSRS-TriggerStates-2))
                                                    OF INTEGER (1..maxNrofSRS-TriggerStates-1)   OPTIONAL  -- Need M
            ]]
        },
        semi-persistent                 SEQUENCE {
            associatedCSI-RS                NZP-CSI-RS-ResourceId                                OPTIONAL, -- Cond NonCodebook
            ...
        },
        periodic                        SEQUENCE {
            associatedCSI-RS                NZP-CSI-RS-ResourceId                                OPTIONAL, -- Cond NonCodebook
            ...
        }
    },
    usage                               ENUMERATED {beamManagement, codebook, nonCodebook, antennaSwitching},
    alpha                               Alpha                                                   OPTIONAL, -- Need S
    p0                                  INTEGER (-202..24)                                       OPTIONAL, -- Cond Setup
    pathlossReferenceRS                 PathlossReferenceRS-Config                               OPTIONAL, -- Need M
    srs-PowerControlAdjustmentStates    ENUMERATED { sameAsFci2, separateClosedLoop}            OPTIONAL, -- Need S
    ...,
    [[
    pathlossReferenceRSList-r16         SetupRelease { PathlossReferenceRSList-r16}             OPTIONAL  -- Need M
    ]]
}


PathlossReferenceRS-Config ::=          CHOICE {
    ssb-Index                           SSB-Index,
    csi-RS-Index                        NZP-CSI-RS-ResourceId
}
```

SRS resource info. configuration:

```
SRS-Resource ::=                        SEQUENCE {
    srs-ResourceId                          SRS-ResourceId,
    nrofSRS-Ports                           ENUMERATED {port1, ports2, ports4},
    ptrs-PortIndex                          ENUMERATED {n0, n1 }                    OPTIONAL,   -- Need R
    transmissionComb                        CHOICE {
        n2                                      SEQUENCE {
            combOffset-n2                           INTEGER {0..1},
            cyclicShift-n2                          INTEGER {0..7}
        },
        n4                                      SEQUENCE {
            combOffset-n4                           INTEGER {0..3},
            cyclicShift-n4                          INTEGER {0..11}
        }
    },
    resourceMapping                         SEQUENCE {
        startPosition                           INTEGER {0..5},
        nrofSymbols                             ENUMERATED {n1, n2, n4},
        repetitionFactor                        ENUMERATED {n1, n2, n4}
    },
    freqDomainPosition                      INTEGER {0..67},
    freqDomainShift                         INTEGER {0..268},
    freqHopping                             SEQUENCE {
        c-SRS                                   INTEGER {0..63},
        b-SRS                                   INTEGER {0..3},
        b-hop                                   INTEGER {0..3}
    },
    groupOrSequenceHopping                  ENUMERATED { neither, groupHopping, sequenceHopping },
    resourceType                            CHOICE {
        aperiodic                               SEQUENCE {
            ...
        },
        semi-persistent                         SEQUENCE {
            periodicityAndOffset-sp                 SRS-PeriodicityAndOffset,
            ...
        },
        periodic                                SEQUENCE {
            periodicityAndOffset-p                  SRS-PeriodicityAndOffset,
            ...
        }
    },
    sequenceId                              INTEGER {0..1023},
    spatialRelationInfo                     SRS-SpatialRelationInfo                 OPTIONAL,   -- Need R
    ...,
}
```

SRS spatial relation info configuration

```
SRS-SpatialRelationInfo ::=     SEQUENCE {
    servingCellId                   ServCellIndex               OPTIONAL,   -- Need S
    referenceSignal                 CHOICE {
        ssb-Index                       SSB-Index,
        csi-RS-Index                    NZP-CSI-RS-ResourceId,
        srs                             SEQUENCE {
            resourceId                      SRS-ResourceId,
            uplinkBWP                       BWP-Id
        }
    }
}
```

The SRS-SpatialRelationInfo IE, shown in the SRS spatial relation info configuration presented above, provides the beam direction that the UE should use for the SRS resource via a CSI-RS or an SSB or an SRS resource. With this signaling, the gNB indicates to the UE that it shall use the spatial filter used for the reception of the SSB or CSI-RS resource or the transmission of the SRS resource provided in the SRS-SpatialRelationInfo IE of an SRS resource to transmit the SRS resource. The indication of the SRS-SpatialRelationInfo is vital in the case of FR2 where beamformed transmissions are required. The pathloss reference RS, which is configured via the RRC or indicated via a MAC, is used in the power control settings of the SRS to determine the PathLoss (PL) estimate for the transmission of the SRS [3].

The transmit power of SRS is obtained by a combination of parameters configured/indicated to the UE as follows: If a UE transmits SRS on active UL bandwidth part $b$ of carrier $f$ of serving cell $c$ using SRS power control adjustment state with index $l$, the UE determines the SRS transmission power $P_{SRS,b,f,c}(i,q_s,l)$ in SRS transmission occasion $i$ for the SRS resource set $q_s$ as:

$$P_{\text{SRS},b,f,c}(i,q_s,l) =$$

$$\min \begin{cases} P_{\text{CMAX},f,c}(i), \\ P_{\text{O\_SRS},b,f,c}(q_s) + 10\,log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{cases} [\text{dBm}]$$

where,

- $P_{\text{CMAX},\,f,c}(i)$ is the configured maximum UE transmit power [7] and [8]
- $P_{\text{O\_SRS},b,f,c}(q_s)$ is provided by the higher layer parameter p0 or the nominal PUSCH Tx power
- $M_{\text{SRS},b,f,c}(i)$ is an SRS bandwidth expressed in number of resource blocks, which is obtained from the SRS configuration
- $PL_{b,f,c}(q_d)$ is a downlink pathloss estimate in dB calculated from the DL RS $q_d$ as described in [3] for the SRS resource set $q_s$. The pathloss estimate may be derived from the pathloss reference RS (a CSI-RS or an SSB resource) configured/indicated via a higher layer.
- $\alpha_{\text{SRS},b,f,c}(q_s)$ is a pathloss compensation factor configured by the higher layer parameter Alpha.
- $h_{b,f,c}(i,l)$ is a closed loop power correction function that is dependent on the closed loop power control adjustment state configured in the SRS resource set IE (shown in the figure above).

**Physical Uplink Control Channel (PUCCH)**

The physical uplink control channel (PUCCH) carries control information such as channel state information (CSI) feedback, the hybrid automatic repeat request (HARQ) acknowledgement (ACK)/negative acknowledgements (NACK) for physical downlink shared channel (PDSCH) transmissions, and scheduling requests (SR). A unit of the PUCCH that carries uplink control information (UCI) is a PUCCH resource. A PUCCH resource is an RRC configured space in a certain format (format 0, 1, 2, 3) in a certain UL bandwidth-part (BWP) [3, 6]. The UL-BWP is a contiguous frequency domain space on which the UE transmits in the UL. The UE may be configured with up to 4 UL-BWPs, and it transmits on only one of them at a given time instance. The UL BWP on which the UE transmits is the active UL BWP. The UE is configured with four PUCCH resource sets via RRC. The PUCCH resources in a given PUCCH resource set can carry a specified load of uplink control channel information as indicated by the higher-layer parameter maxPayloadMinus1' [3]. The other parameters in the PUCCH resource configuration indicate the frequency hopping characteristics of the PUCCH resource.

The PUCCH resources that may carry the various types of the uplink control information (UCI) - Hybrid automatic repeat request (HARQ) acknowledgement (ACK)/negative acknowledgements (NACK) for physical downlink shared channel (PDSCH) transmissions, scheduling requests (SR) and DL channel state information (CSI) feedback - are configured and indicated as follows [2, 3, 6]:

- The PUCCH resource that carries the HARQ ACK/NACK for a PDSCH, is indicated by a 3-bit PUCCH resource indicator field in the PDCCH that schedules the PDSCH. The mapping from the PUCCH resource indicator field contained in the PDCCH to a PUCCH resource in the four PUCCH resource sets is configured by the gNB via RRC as described in [3].
- The scheduling requests (SR) are configured via RRC in the 'SchedulingRequestConfig' IE and other associated IEs, and each scheduling request configuration includes the IDs of PUCCH resource(s) that carry the SRs. The transmission settings of the SRs (periodicity, offset, etc.) are configured at the RRC level.
- The CSI report configurations received via RRC at the UE includes the IDs of the PUCCH resources(s) that carry the semi-persistent and/or periodic CSI reports in the UL. The transmission settings of the same are provided in the CSI report configurations. The activation/deactivation of the semi-persistent CSI reports is handled via MAC-CE messages. The configuration of the CSI reports via RRC is enough for the transmission of periodic CSI reports.

The beam direction and power control settings of the PUCCH resources are configured together in a 'PUCCH-SpatialRelationInfo' IE, as shown in the PUCCH-SpatialRelationInfo configuration below. The parameter 'referenceSignal' in the PUCCH-SpatialRelationInfo IE contains the ID of a DL reference signal (a CSI-RS, or an SSB), or a UL reference signal (sounding reference signal - SRS). The other parameters in the PUCCH-SpatialRelationInfo IE comprise open and closed loop power control settings for the PUCCH transmission.

Applying a 'PUCCH-SpatialRelationInfo' IE to a PUCCH resource means that the UE shall use the same spatial filter as it uses for the reception of the DL RS or the transmission of the UL RS mentioned in the parameter 'referenceSignal' of the IE for the transmission of the PUCCH resource, and should apply the power control parameters in the IE to derive the transmit power for the transmission of the PUCCH resource. The PUCCH resources may be grouped via a PUCCH resource group ID for the application of spatial relation to a group of one or more PUCCH resources.

PUCCH-SpatialRelationInfo configuration

```
PUCCH-SpatialRelationInfo ::=          SEQUENCE {
    pucch-SpatialRelationInfoId        PUCCH-SpatialRelationInfoId,
    servingCellId                      ServCellIndex              OPTIONAL,    -- Need S
    referenceSignal                    CHOICE {
        ssb-Index                          SSB-Index,
        csi-RS-Index                       NZP-CSI-RS-ResourceId,
        srs                                PUCCH-SRS
    },
    pucch-PathlossReferenceRS-Id       PUCCH-PathlossReferenceRS-Id,
    p0-PUCCH-Id                        P0-PUCCH-Id,
    closedLoopIndex                    ENUMERATED { i0, i1 }
}


PUCCH-SpatialRelationInfoExt-r16 ::=   SEQUENCE {
    pucch-SpatialRelationInfoId-v1610      PUCCH-SpatialRelationInfoId-v1610     OPTIONAL,    -- Cond SetupOnly
    pucch-PathlossReferenceRS-Id-v1610     PUCCH-PathlossReferenceRS-Id-v1610    OPTIONAL,    --Need R
    ...
}
```

The derivation of the transmit power of a PUCCH resource comprises the addition of open loop and closed loop power adjustments. If a UE transmits a PUCCH on an active UL bandwidth-part (BWP) $b$ and carrier $f$ in the primary cell $c$ using a PUCCH power control adjustment state with index $l$, the UE determines the PUCCH transmission power $P_{\text{PUCCH},b,f,c}(i,q_u,q_d,l)$ in PUCCH transmission occasion $i$ as [3]:

$$P_{\text{PUCCH},b,f,c}(i, q_u, q_d, l) =$$

$$\min \left\{ \begin{array}{l} P_{\text{CMAX},f,c}(i), \\ P_{\text{O\_PUCCH},b,f,c}(q_u) + 10\,log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array} \right\} [\text{dBm}]$$

where,

- $P_{\text{CMAX},f,c}(i)$ is the configured maximum UE transmit power defined in [7] and [8],

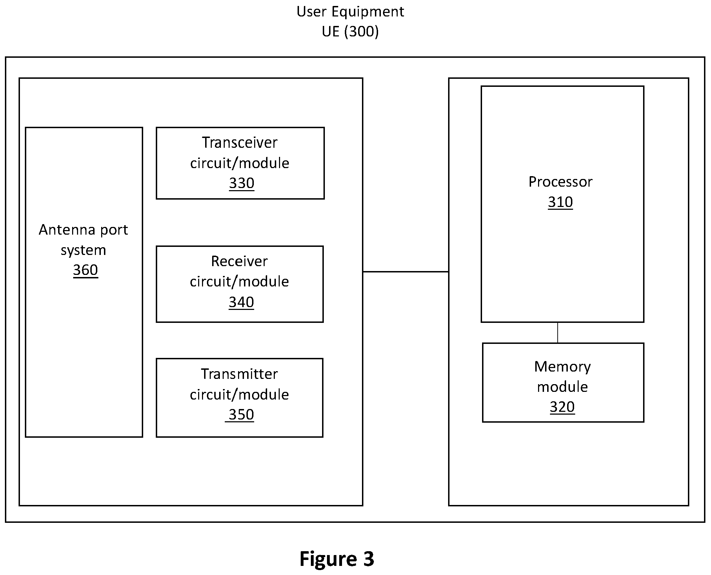

- $P_{\text{O\_PUCCH},b,f,c}(q_u)$ is the sum of the nominal PUCCH transmit power $P_{\text{O\_NOMINAL\_PUCCH}}$, provided by a higher layer parameter *p0-nominal* (or set to a default value of 0 dBm), and $P_{\text{O\_UE\_PUCCH}}(q_u)$ provided by the parameter *p0-PUCCH-Value* and other dependent parameters. The ID of the *p0-PUCCH-Value* to choose is provided in *p0-PUCCH-Id* in the PUCCH-SpatialRelationInfo IE (shown in Fig. 3). The value $q_u$ is the size of for a set of $P_{\text{O\_UE\_PUCCH}}$ values provided via the higher layer parameter *maxNrofPUCCH-P0-PerSet* [6].

- $M_{\text{RB},b,f,c}^{\text{PUCCH}}(i)$ is the bandwidth of the PUCCH resource [1], which is obtained from the configuration of the PUCCH resource.

- $PL_{b,f,c}(q_d)$ is a downlink pathloss estimate in dB calculated using RS resource index $q_d$ as described in [3]. The UE may be indicated explicitly with a pathloss reference RS for PUCCH via a PUCCH-SpatialRelationInfo. The pathloss reference RS is essentially a DL RS from which the UE estimates the pathloss from the gNB or any other network entity.

- The parameters $\Delta_{\text{F\_PUCCH}}(F)$ and $\Delta_{\text{TF},b,f,c}(i)$ are PUCCH power adjustment factors dependent on the PUCCH format.

- The parameter $g_{b,f,c}(i,l)$ is a closed loop power adjustment dependent on a PUCCH power control adjustment state (configured in the parameter closedLoopIndex in the PUCCH-SpatialRelationInfo IE).

The UE is configured with up to 8 PUCCH-SpatialRelationInfo parameters in 3GPP Rel. 15 and with up to 64 PUCCH-SpatialRelationInfo IEs in 3GPP Rel. 16. A specific beam direction and power control setting is applied to a PUCCH resource or a PUCCH resource group via a MAC-CE message in 3GPP Rel. 15 and 3GPP Rel. 16 that associates a PUCCH resource or a group of PUCCH resources with a PUCCH-SpatialRelationInfo.

**Multi-TRP scenarios**

In 3GPP Rel. 16, multi-TRP transmissions that improve the reliability and robustness of were standardized. A network node (or gNB) may be viewed as a TRP. Two types of multi-TRP transmissions are possible:

- **Single DCI based multi-TRP:** A single DCI schedules transmission of PDSCH(s) from more than one TRP - the PDSCH(s) may be multiplexed in space, time and/or frequency domains. When the PDSCH(s) are multiplexed to the UE in space, time and/or frequency domains from different TRPs, the TCI-field in the DCI may indicate more than one TCI-state to indicate the QCL assumptions for the reception of multiple parts of a single PDSCH or multiple PDSCHs. The TCI-field in the PDSCH-scheduling DCI in 3GPP Rel. 15, which supports only single-TRP transmissions from a single DCI, indicates only one TCI-state for the scheduling of a PDSCH. The TCI-field is of size $b$ bits and can indicate up to $2^b$ different TCI-states. A higher layer, however, may configure $T \geq 2^b$ TCI-states. For the purpose of indication via the TCI-field for the PDSCH, the UE may receive a MAC-CE message that down-selects $2^b$ TCI-states from the $T$ TCI-states configured via a higher layer so that each codepoint of the TCI-field maps to a TCI-state. To support single-DCI based multi-TRP transmissions, in 3GPP Rel. 16, a MAC-CE message providing a mapping of one or more higher-layer-configured TCI-states with a codepoint of the TCI-field to the UE, has been introduced.

- **Multi-DCI based multi-TRP:** In this scenario, at a given time instant, the UE may receive multiple PDSCHs, each scheduled by a different DCI. The *CORESETpoolIndex* is a parameter introduced in 3GPP Rel. 16 [4] in the configuration of a CORESET that may be used in this scenario. This parameter or index may be used to group CORESETs into different pools. The pools may be organized according to the TRPs they are associated with in the case of multi-TRP transmissions. The PDCCHs transmitted on the CORESETs configured with the same *CORESETpoolIndex* value may be considered to be associated with the same TRP. A CORESET belonging or associated to a *CORESETpoolIndex* means that the higher layer configuration of the CORESET may comprise said *CORESETpoolIndex* (value). When a UE is configured, by the network node, with multiple *CORESETpoolIndex* values, the UE understands that it may receive multiple PDSCHs, possibly overlapped in time and frequency domains, scheduled by multiple PDCCHs that are received on CORESETs configured with different *CORESETpoolIndex* values, i.e., CORESETs associated with different TRPs.

There are however drawbacks with the known solutions, which include at least higher layer control information overhead and higher latency.

**SUMMARY**

As mentioned above, it is an objective of the embodiments herein to provide methods and apparatuses for signaling framework for flexible beam management in a wireless communications network such as advanced 5G networks.

According to an aspect of some embodiments herein, there is provided a method performed by a UE, the method comprising:

- deriving or obtaining, from one or more QCL setting(s) and/or spatial filter(s) or spatial relation(s) and/or pathloss reference(s) configured or known to the UE, one or more transmit setting(s) for the transmission of one or more UL channel(s) and/or resource(s) and one or more receive setting(s) for the reception of one or more DL channel(s) and/or resource(s) in one or more CC(s); and

- applying the derived or obtained setting(s) for the reception of said one or more DL channel(s) and/or resource(s) and for the transmission of said one or more UL channel(s) and/or resource(s).

According to another aspect of some embodiments herein, there is provided a method performed by a UE, the method comprises:

- receiving, from a network node, a single explicit indication for at least one bandwidth part of at least one CC, wherein the indication provides:

  - one or more receive setting(s) for at least two DL channels, or one DL channel and one DL resource, or two DL resources, or
  - one or more transmit setting(s) for at least two UL channels, or one UL channel and one UL resource, or two UL resources, or
  - one or more transmit setting(s) for at least one DL channel and/or resource and one or more receive setting(s) for at least one UL channel and/or resource; wherein the setting(s) for said UL and/or DL channel(s) and/or resource(s) are received, from the network node, via one or more TCI configuration(s) in the received single explicit indication, wherein a TCI configuration provides at least one RS, or at least one reference resource along with an indication of the transmission and/or reception parameter(s) to be derived or obtained from each one of the RS(s) or the reference resources(s) provided by the TCI configuration(s), and

- applying said setting(s) provided in the single explicit indication for the reception of said DL channel(s) and/or resource(s), and/or for the transmission of said UL channel(s) and/or resource(s).

According to another aspect of embodiments herein, there is provided a UE comprising a processor and a memory containing instructions executable by the processor, whereby said UE is operative or configured to perform any one of the embodiments presented in the detailed description related to the actions performed by the UE, such as in method claims 1-12.

According to an aspect of some embodiments herein, there is provided a method performed by a network node or gNB, as provided in claim 14.

According to another aspect of embodiments herein, there is provided a network node comprising a processor and a memory containing instructions executable by the processor, whereby said network node is operative or configured to perform any one of the embodiments presented in the detailed description related to the network node, such as in at least method claim 14.

There is also provided a computer program comprising instructions which when executed on at least one processor of the UE, cause the at least said one processor to carry out the actions or method steps presented herein.

There is also provided a computer program comprising instructions which when executed on at least one processor of the network node, cause the at least said one processor to carry out the method steps presented herein.

A carrier is also provided containing the computer program, wherein the carrier is one of a computer readable storage medium; an electronic signal, optical signal, or a radio signal.

An advantage of embodiments herein is to reduce higher layer control information overhead and latency and enhancing dynamic indication of beam settings for beam management. Additional advantages of the embodiments herein are provided in the detailed description of this disclosure.

**BRIEF DESCRIPTION OF THE DRAWINGS**

Figure 1 depicts a simplified state of the art view of a wireless communications network including a core network and a radio access network.

Figure 2A illustrates a flowchart of a method performed by a UE according to some embodiments.

Figure 2B illustrates a flowchart of another method performed by a UE according to some embodiments.

Figure 3 illustrates a block diagram depicting a UE according to some embodiments herein.

Figure 4 illustrates a flowchart of a method performed by a network node according to some embodiments.

Figure 5 illustrates a block diagram depicting a network node according to some embodiments.

## DETAILED DESCRIPTION

In the following, a detailed description of the exemplary embodiments is described in conjunction with the drawings, in several scenarios to enable easier understanding of the solution(s) described herein.

As mentioned before, it is an objective of the embodiments herein to provide methods and apparatuses for signaling framework for flexible beam management in a wireless communications network such as advanced 5G networks. The embodiments herein provide methods and apparatuses for reducing higher layer control information overhead and enhancing dynamic indication of settings for beam management.

The requirement for streamlined, low-overhead and/or low-latency beam management or transmit-receive settings, in general, for various channel(s) or Reference Signals (RS(s)) in the uplink and downlink centers around the following reasons - fragility of links at higher frequencies and the requirement for link reliability and sustaining link connectivity. The current NR beam management framework involves separation of the indication and/or signaling of the beams for various DL and UL channels and RSs, which increases the latency with which the beam(s) for various channels and RSs are signaled. It may be possible to unify the beam management in the uplink and downlink and/or sidelink, by having a common indication of beam(s) for all of them. Such an indication may be introduced for the following reasons:

- Many times, the UE may use only one active beam that may be formed in the same direction for both reception and transmission purposes. Hence, indicating a common beam or having a single default beam for multiple channel(s) or RS(s) for the downlink and uplink instead of an individual signaling for each of them may significantly reduce the control information overhead.
- A UE that has a beam correspondence capability [7-8] may use the same beams for channels or RS(s) 'related' to each other in the uplink and the downlink (for e.g., a PDCCH and a PUSCH that is scheduled by the PDCCH, a PDSCH and the PUCCH that carries the HARQ for the PDSCH, etc.)

A separate indication of the UL and DL beams, on the other hand, may be required for the following reasons:

- A UE that does not have a beam correspondence capability requires a separate beam direction for the downlink and the uplink. Therefore, a separation of the beam indication for the uplink and downlink, even if it is for 'related' channels, is necessary in this case.
- The beamforming performed by the UE needs to comply with Maximum Permissible Exposure (MPE) regulations. For example, in scenarios where a UE is close to the human body, due to regulations on exposure limits set for the UE, the UE may not be able to form the beam in the same direction as it receives, thereby forcing the UE to choose a different beam direction than the one it uses in the downlink. Therefore, the separation of the UL and DL beams and/or beam indication is required to perform beam management that complies with the regulations.

In this disclosure, a common beam management framework or a common transmit-receive settings framework for DL reception and UL transmission (and/or sidelink transmission and reception) is provided. The beam management framework, whose advantages are provided above, may be extended, in general, for transmit-receive settings for multiple channels in the DL and UL. First, methods for explicit signaling of a common beam or common transmit-receive settings for UL and DL channels is provided in the disclosure. It is followed by obtaining or deriving the transmit-receive settings (or Tx/Rx beams) without an explicit common transmit-receive beam/setting indication. Finally, a common TCI state definition for UL and DL is provided that could be used for the aforementioned purposes.

**Common setting/beam indication for one or more carrier component(s)**

A common setting/beam for UL and DL channels may be indicated explicitly for one or more carrier components (CCs) by a network node or gNB to the UE.

In accordance with an embodiment, the UE is configured to receive, from a network node, a single explicit indication for at least one bandwidth part of at least one carrier component, CC, wherein the indication provides:

- one or more receive setting(s) for at least two Downlink, DL, channels, or one DL channel and one DL resource, or two DL resources, or

- one or more transmit setting(s) for at least two Uplink, UL, channels, or one UL channel and one UL resource, or two UL resources, or

- one or more transmit setting(s) for at least one DL channel and/or resource and one or more receive setting(s) for at least one UL channel and/or resource; wherein the setting(s) for said UL and/or DL channel(s) and/or resource(s) are received, from the network node, via one or more transmission configuration indication, TCI, configuration(s) in the received single explicit indication, wherein a TCI configuration provides at least one reference Reference Signal (RS) or at least one reference resource along with an indication of transmission and/or reception parameter(s) to be derived or obtained from each one of RS(s) or the reference resource(s) provided by the TCI configuration(s).

When the UE receives the single explicit indication, as described above, the UE may apply said settings provided in the single explicit indication for the reception of said one or more DL channel(s) or resource(s) and/or for the transmission of said one or more UL channel(s) and/or resource(s).

A DL channel or a resource may refer to any DL transmission related to or any configured DL resources for a physical downlink shared channel (PDSCH), a physical downlink control channel (for e.g., a CORESET), a physical broadcast channel (PBCH), a channel state information reference signal (for e.g., a CSI-RS resource or a CSI-RS resource set), synchronization signals or an SS/PBCH block (for e.g., an SSB resource or an SSB resource set).

An UL channel or a resource may refer to any UL transmission related to or any configured UL resources for a physical uplink shared channel (PUSCH), a physical uplink control channel (for e.g., PUCCH resources), a physical random access channel, or sounding reference signals (for e.g., an SRS resource or an SRS resource set).

The transmit and/or receive setting(s) may comprise a spatial filter/spatial relation/beam direction setting. The whole or a part of the setting(s) may be provided with reference to a reference RS or a reference resource for the UL or DL. The term 'transmit setting(s) or transmission setting(s) for an UL transmission' or 'UL transmission parameter(s)' may indicate one or more of the following parameters or setting(s) of an UL transmission: spatial relation/Transmitted (Tx) spatial filter/Tx beam direction, pathloss reference RS or pathloss reference resource, port(s) to be used for the transmission, closed loop power control indication, parameters alpha, p0. The spatial relation/Transmitted (Tx) spatial filter/Tx beam direction, pathloss reference RS or pathloss reference resource for an UL transmission may be provided with reference to a reference RS or a reference resource.

Similarly, the term 'receive setting(s) or reception setting(s) for a DL reception' or 'DL reception setting(s)' or 'DL reception parameter(s)' may indicate one or more of the following parameters, which are derived or obtained or calculated or evaluated from/with reference to one or more reference RS(s) or reference resources: Doppler shift, Doppler spread, average delay, delay spread, Receiver (Rx) spatial filter/Rx beam direction. The providing/obtaining of a reception setting or a receive setting for a DL reception may mean the providing/obtaining of one or more reference RS(s) or reference resource(s) to derive one or more of the above DL reception parameters (the indication of which parameter(s) to derive may also be provided/obtained along with the reference signal(s) or resource(s)). A QCL setting is an example of a DL reception setting - it comprises one or more RS(s) and a QCL type indication associated with each RS. One or more of the UL transmission setting(s) or parameter(s) may be obtained from one or more DL reception setting(s) or the reference signal(s) (RSs) in TCI state(s) or from the reference signal(s) in the QCL setting(s) or associated with the QCL setting(s) provided in TCI state(s). For example, the spatial relation or pathloss reference for an UL transmission may be obtained from a RS provided in a TCI state with a specific QCL type.

An RS used as a reference to provide the whole or a part of a transmit and/or receive setting(s), in this disclosure, may be any configured resource(s) of one of the following: a channel state information reference signal (for e.g., a CSI-RS resource or a CSI-RS resource set), synchronization signals, SS/PBCH block (for e.g., an SSB resource or an SSB resource set) or a sounding reference signal (for e.g., an SRS resource or an SRS resource set).

In one example, the UE may be provided from the network node, with one transmit and receive setting(s) for the data and control channels in the DL and UL mentioned above (the PDSCH, PUSCH, PDCCH and PUCCH), which would result in a common setting/beam for PHY layer data and control channels in the cell.

The 'setting(s)/beam(s)' indicated in this embodiment may be referred to as the common setting(s)/beam(s) in this disclosure. The signaling or the indication for the common setting(s)/beam(s) may be referred to as the 'common setting(s)/beam(s) signaling' or the 'common setting(s)/beam(s) indication' (it may be received by the UE via any layer as previously mentioned) in this disclosure.

**Indication of the common setting(s) via MAC-CE or DCI**

As previously mentioned, the above single explicit indication may be performed/received, via a MAC-CE message or via the physical layer (e.g., via the DCI). The MAC-CE message or DCI may be signaled from a network node to the UE. In an exemplary embodiment, the UE is configured to receive a MAC-CE message or a DCI that comprises or refers to one or more identities or identifications (IDs) of transmission configuration indication state(s) (TCI-states) or information element(s) (IEs) configured to the UE.

For example, after the reception of the MAC-CE message or the DCI, the UE is configured to apply the setting(s) provided in the one or more TCI-states for the reception of one or more DL channel(s) or resource(s) and/or the transmission of one or more UL channel(s) and/or resource(s) as previously mentioned. The one or more TCI states may provide one or more RSs or reference resource(s) along with QCL assumptions and/or other setting(s) for the application to the UL and/or DL channel(s) or resource(s). The transmission setting(s) for an UL transmission may be obtained from the QCL setting(s) in the indicated TCI state. For example, one or more of the following transmission settings for an UL transmission of one or more UL channel(s) or resource(s) may be obtained or derived from the reference signal(s) or reference resource(s) provided in the indicated TCI state: spatial relation, pathloss reference RS. The reference signal(s) or the reference resource(s) chosen to obtain the UL transmission setting(s) may depend on the QCL setting(s) associated with the reference signal(s) or reference resource(s).

In an exemplary embodiment, the channel(s) or resource(s) for which the one or more TCI states is/are to be applied may be provided via a higher layer or may be provided in the MAC-CE message or in the DCI itself. In an example, the MAC-CE message may provide a TCI state, along with an indication via an RRC parameter that indicates the DL and UL channel(s) and/or resource(s) for which the TCI state shall be applied. For example, an RRC parameter might indicate that the TCI state shall be applied for PDSCH, one or more CORESETs, PUSCH and one or more PUCCH resource(s). Then, after the reception of the MAC-CE, the UE is configured to apply the transmit setting(s) obtained or derived from the indicated TCI state(s) to said UL channel(s) and/or resource(s) and the receive setting(s) obtained or derived or indicated in the TCI state(s) to said DL channel(s) and/or resource(s). In a second example, a DCI may indicate a TCI state via the TCI field in the DCI. If an RRC parameter indicating the application or obtaining or derivation of the setting(s) in the TCI state for the DL reception or UL transmission of one or more DL and/or UL channel(s) or resource(s) is received by the UE, it applies or obtains or derives the setting(s) to/for said channel(s) or resource(s) after the decoding of the DCI. In a third example, the MAC-CE message or DCI may comprise an indicator that indicates to which UL and/or DL channel(s) and/or resource(s) the provided TCI state(s) is to be applied. For instance, the MAC-CE message may comprise an x-bit field for the indicator wherein if the field is received with a value of $b_0$, the UE applies the setting(s) in the TCI state(s) provided in the MAC-CE or DCI to only one UL or DL channel and if the field is received with a value of $b_1$, the UE applies the setting(s) in the TCI state(s) provided in the MAC-CE or DCI to the PDSCH, one or more CORESET(s), PUSCH and one or more PUCCH resource(s). The MAC-CE message that provides the common setting(s) indication may be referred to as 'Common setting(s) MAC-CE' or 'CS MAC-CE' in this disclosure. The DCI, similarly, may be referred to as 'common setting(s) DCI'.

In accordance with an embodiment, the UE is configured to apply the settings provided in the common setting(s) indication to said UL and/or DL channel(s) and/or resource(s) that are present in the active UL and/or DL BWP in one or more CC(s). The CC(s) to which the settings are to be applied may be indicated in a MAC-CE message (the common setting(s) MAC-CE message for example, or any other MAC-CE message) and/or provided via an indication that is received via the PHY layer or a higher layer. For example, a higher layer may provide a list of CCs for which the same setting(s) may be applied. When a MAC-CE or a DCI indication of a common setting is provided for at least one of the CC(s) in the list is received by the UE, the UE applies the setting(s) in the TCI state provided by the signaling to said channel(s) and/or resource(s) in all the CC(s) in the list. The CC(s) list of CCs for which the same setting(s) may be applied by the UE may also be fixed in the NR specifications instead of being signaled to the UE. For example, it may be fixed that the UE applies the setting(s) in the TCI state provided by a common setting(s) indication to all the CCs that are in the same band as the CC for which the common signaling was intended (intra-band indication).

In accordance with an embodiment, the UE is configured to receive the common setting(s) signaling/indication for one or more specific UL and/or DL BWPs. After the reception of the indication, the setting(s) provided in a TCI state of the common setting(s) is/are applied to said UL and/or DL channel(s) and/or resource(s) that are present in the specified BWPs. For example, the common setting MAC-CE may be received with the ID(s) of one or more UL and/or DL BWP(s). After the reception of the MAC-CE message, the setting(s) provided in the TCI state(s) indicated by the MAC-CE is/are applied to said UL and/or DL channel(s) and/or resource(s) that are present in the indicated DL and/or UL BWPs in one or more CC(s).

In certain cases of PDSCH, PUSCH, PDCCH and PUCCH, the transmit or receive setting(s) may be applied with a single explicit signaling, that is the common setting signaling/indication, as the indication is currently provided by the NR specifications using diverse other means that have higher latency and control information overhead.

In accordance with an embodiment, after the UE has received a common setting indication for UL and/or DL channels in a CC, e.g., 'C1', the UE is configured to apply the transmit or receive settings provided by the common beam MAC-CE to at least one of the following (whichever setting is applicable to a given channel or RS):

- PDSCH(s) scheduled by a DCI without a TCI field at least in carrier component 'C1'
- PUSCH(s) scheduled at least in the CC, 'C1' via a higher layer configured grant or a PUSCH scheduled at least in CC 'C1' via a DCI without an SRI field or a DCI that has an SRI field with 0 bits
- one or more CORESETs in the active DL BWP of at least the CC 'C1', in general, or one or more CORESETs in the active DL BWP of at least the CC 'C1' configured with CORESET pool index 0 or without any CORESET pool index value
- one or more PUCCH resources in the active UL BWP of at least the CC 'C1', in general, or one or more PUCCH resources in the active UL BWP of at least the CC 'C1' that are configured with CORESET pool index 0 or without any CORESET pool index value.

In accordance with an embodiment, after the UE has received a common setting indication for UL and/or DL channels in CC C1' the UE is configured to apply the transmit or receive settings provided by the common beam MAC-CE to at least one of the following sets of channels in one or more CCs (whichever setting is applicable for a given channel):

- the PDCCH, the PDSCH, the PUCCH and the PUSCH, or
- the PDCCH and the PUCCH, or
- the PDSCH and the PUSCH, or
- the PDCCH, the PDSCH and the PUSCH, or
- the PDSCH, the PUCCH and the PUSCH, or
- the PUCCH and the PUSCH.

In this method, applying the setting(s) to the PDCCH may mean the application of the setting(s) to one or more CORESET(s) and applying the setting(s) to the PDSCH may mean the application of the setting(s) to one or more receptions of PDSCH(s) (the PDSCH(s) may be activated/scheduled by any DCI format). Similarly, applying the setting(s) to the PUCCH may mean the application of the setting(s) to one or more PUCCH resource(s) and applying the setting(s) to the PUSCH may mean the application of the setting(s) to one or more transmissions of PUSCH(s).

An instance of the application of the above method is when a CC in which the setting(s) are being applied is not configured with either the control channel or the data channel. For example, the setting(s) may be applied only to the data channel(s) in a CC (as in bullet 3) if there is no control channel is configured in the CC (i.e., a CC configured without CORESETs and/or uplink control channel resources, and/or the scheduling in the CC is carried out from a different CC). In another example, the setting(s) may be applied only to the control channel(s) (as in bullet 2) in a target CC where no data channel is configured. The bullets 4 and 5 in the list above may be applicable when the control channel in one of the directions (uplink or downlink) is not configured, i.e., CCs with asymmetric links. The bullet 6 in the list above may be applicable for a supplementary uplink in a CC.

**Default beams for UL and DL channel(s) and/or resource(s)**

In the previous subsection, a common setting or beam is provided explicitly to the UE via the PHY layer or a higher layer. In the following subsection, the common setting(s) may be derived by the UE from known setting(s) of fixed or indicated reference signal(s) or reference resource(s) or from known (i.e., fixed in the NR specification, for example) or indicated TCI state(s).

In accordance with an embodiment, instead of receiving an explicit indication providing transmit and/or receive setting(s) from the network node as previously described, the UE is configured to use or derive one or more transmit setting(s) for the transmission of one or more UL channel(s) and/or resource(s) and/or to use or derive one or more receive setting(s) for the reception of one or more DL channel(s) and/or resource(s) in one or more CC(s) from one or more QCL setting(s) and/or spatial filter(s) or spatial relation(s) and/or pathloss reference(s) configured or known to the UE.

The 'deriving' of a setting from 'X' for 'Y' may mean the use of a reference RS or reference resource from 'X' or related to 'X' or used for/in 'X' for the evaluation or obtaining or calculation of transmission or reception parameter(s) or setting(s) of 'Y', or the use of the transmit/receive setting(s) of 'X', if X is a DL/UL channel or resource, for the transmission or reception parameter(s) or setting(s) of 'Y'.

The UE may then apply said one or more derived settings for the reception of said one or more DL channel(s) or resource(s) and/or for the transmission of said one or more UL channel(s) and/or resource(s).

A DL channel or resource may refer to any DL transmission related to or any configured DL resources for a PDSCH, a PDCCH (for e.g., a CORESET), a CSI-RS (for e.g., a CSI-RS resource or a CSI-RS resource set), SS/PBCH block (for e.g., an SSB resource or an SSB resource set) or a PBCH.

A UL channel or resource may refer to any UL transmission related to or any configured UL resources for a PUSCH, a PUCCH (for e.g., PUCCH resources), a physical random access channel, or SRS(s) (for e.g., an SRS resource or an SRS resource set).

The QCL setting(s) and/or spatial filter or spatial relation setting(s) and/or pathloss reference setting(s) may be obtained or derived from known or indicated reference signal(s) or reference resource(s) or from known or indicated TCI state(s).

The transmit or receive setting(s) derived from known setting(s) of known or indicated RS(s) or reference resource(s) or from known or indicated TCI state(s) may be referred to as the default setting(s).

In an example, the UE is configured to use or derive the transmit setting(s) for the transmission of the UL data and control channels and the derivation of the receive setting(s) for the reception of DL data and control channels from a known or fixed or indicated TCI state or from a known or fixed or indicated QCL setting(s) associated with a PDSCH or a CORESET.

The QCL settings associated with a CORESET or a PDSCH may be provided via a TCI state or any other permissible or possible method in the NR specifications. The association of a TCI state with a CORESET or a PDSCH may be performed via any permissible method in the NR specifications.

Multiple exemplary approaches are applicable for the above-mentioned QCL setting(s) and/or spatial relation setting(s) as described below.

In an example, the QCL setting(s) are taken from one or more CORESET(s) in the active DL BWP of a CC. This means, the UE is configured to use or derive the one or more transmit setting(s) for the transmission of one or more UL channel(s) or resource(s) and the one or more receive setting(s) for the reception of one or more DL channel(s) or resource(s) from the QCL setting(s) of one or more CORESET(s) in the active DL BWP of a CC. The CORESETs may be called reference CORESET(s). For example, the transmit setting(s) for said UL channel(s) and/or resource(s) and/or the receive setting(s) for said DL channel(s) and/or resource(s) may be obtained or derived from the RS provided in the QCL setting(s) of the one or more reference CORESET(s). In one instance, the pathloss reference RS and/or spatial relation for said UL channel(s) and/or resource(s) and the Rx spatial filter for said DL channel(s) and/or RS(s) may be obtained or derived from the RS associated with a specific QCL type (QCL type 'A' or QCL type 'D', for example). The UE may be configured with $n \geq 1$ reference CORESET(s). The $n \geq 1$ reference CORESET(s), for example, may be the CORESET(s) configured to the UE with the $n$ lowest or $n$ highest ID value(s) in the active DL BWP of a reference CC.

In another example, the transmit setting(s) for said UL channel(s) and/or resource(s), and/or receive setting(s) for said DL channel(s) and/or resource(s) may be obtained or derived from the RS associated with the QCL setting(s) contained in one or more TCI states in a CC. The TCI state(s) may be called reference TCI state(s). The UE may be configured with $n \geq 1$ reference TCI-states. In one instance, the $n \geq 1$ reference TCI-state(s) may be the active TCI state(s) with the $n$ lowest or $n$ higher ID value(s) in the active DL BWP of a reference CC. In another instance, the $n \geq 1$ reference TCI-state(s) may be the active TCI state(s) associated with one or more codepoint(s) of the TCI field in the DCI. For example, the reference TCI state(s) is/are then the active TCI-state(s) associated with the $n$ lowest or $n$ highest codepoint value(s) of the TCI field in the DCI. Note that a TCI-state is said to be active if it has been activated via a MAC-CE for a channel and/or RS, or if it is/has been applied by the UE for the reception or transmission of a channel and/or RS. For example, the pathloss reference RS and/or spatial relation for said UL channel(s) and/or resource(s) may be obtained from the RS associated with a specific QCL type (QCL type 'A' or 'D', for example) and the DL setting(s) to be derived from the RS(s) may be provided by the QCL type(s) associated with the RS(s) (which may be as described in the SoTA, for example).

In yet another example, the transmit setting(s) for said UL channel(s) and/or resource(s) and/or the receive setting(s) for said DL channel(s) and/or resource(s) may be obtained or derived from an RS that is used as a spatial relation or as a pathloss reference RS for a PUCCH resource. This PUCCH resource may be denoted as the reference PUCCH resource in the following. In one instance, the reference PUCCH resource may be the PUCCH resource with the lowest ID or highest ID in the active UL BWP of a reference CC. In another instance, the reference PUCCH resource may be a PUCCH resource with an indicated or specified/fixed PUCCH resource group ID in the active UL BWP of a reference CC. For example, when the spatial relation of the reference PUCCH resource is updated by the network node via a MAC-CE, the UE updates the transmit and/or receive spatial filters for said UL and/or DL channel(s) and/or resource(s) respectively in one or more CCs. It may additionally update the pathloss reference RS for said UL channel(s) and/or resource(s) with the RS used as the spatial relation of the reference PUCCH resource.

The term 'reference CC' mentioned in the above methods is the CC in which the reference CORESET(s) or the reference TCI-state(s) or the reference PUCCH resource(s) is/are present or is/are to be taken from. The reference CC may be indicated via a MAC-CE message, or it may be fixed in the NR specifications (e.g., it may be a primary cell or any other specified serving cell). The CC(s) of the UL and DL channel(s) or resource(s) to which the setting(s) are to be applied, which may be called 'target CC(s)', may be indicated via a higher layer and/or provided via a MAC-CE and/or fixed in the NR specifications. For example, when the UE receives a MAC-CE comprising a TCI state indication for the CORESET with the lowest ID in the reference CC, either a MAC-CE or a higher layer signaling (for e.g., RRC) may indicate the CC(s) to which the setting(s) are to be applied by the UE. The target CC(s) may be the only the reference CC or a list of CCs (which may be provided to the UE via network node signaling or fixed in the NR specification) which may include the reference CC. For example, the target CCs may be the set of CCs that are in the same band as the reference CCs.

In accordance with an embodiment, the use/derivation of one or more transmit or receive spatial filters from the QCL assumption(s) of one or more CORESET(s) or one or more reference TCI state(s) or one or more reference PUCCH resource(s) may be enabled via a higher signaling (e.g., RRC, MAC-CE) to the UE.

The above default setting(s) may reduce the explicit signaling overhead of the signaling or configuration of the transmit and/or receive setting(s) for various channel(s) and/or resource(s). The UE may 'default' to the default setting(s) when one or more transmit and/or receive setting(s) are not provided by the network node for a DL or UL channel or RS.

In accordance with an embodiment, the use or derivation of one or more transmit setting(s) for the transmission of one or more UL channel(s) and/or resource(s) and/or the receive setting(s) for the reception of one or more DL channel(s) and/or resource(s), from the QCL assumption(s) of one or more reference CORESET(s) or one or more reference TCI state(s) or one or more reference PUCCH resource(s) may be enabled via a higher signaling (e.g., a single RRC parameter) to the UE. The default setting indication, similar to the common setting, may be used in specific cases of PDSCH, PUSCH, PDCCH and PUCCH, wherein diverse means of indications having higher latency and control information overhead are used.

In accordance with an embodiment, the UE is configured to use or derive one or more transmit or receive setting(s) in a target CC 'C1' from a reference CORESET, a reference TCI state, or a reference PUCCH resource for at least one of the following (whichever setting is applicable to a given channel or RS):

- PDSCH(s) scheduled by a DCI without a TCI field at least in carrier component 'C1'
- PUSCH(s) scheduled at least in carrier component 'C1' via a higher layer configured grant or a PUSCH scheduled at least in carrier component 'C1' via a DCI without an SRI field or a DCI that has an SRI field with 0 bits
- one or more CORESETs in the active DL BWP of at least the carrier 'C1', in general, or one or more CORESETs in the active DL BWP of at least the carrier 'C1' configured with CORESET pool index 0 or without any CORESET pool index value
- one or more PUCCH resources in the active UL BWP of at least the carrier 'C1', in general, or one or more PUCCH resources in the active UL BWP of at least the carrier 'C1' that are configured with CORESET pool index 0 or without any CORESET pool index value.

The set of channels for which the setting(s) are updated may be the control and data channels in the active BWPs of the target CCs.

In accordance with an embodiment, the UE is configured to use or derive one or more transmit or receive setting(s) from a reference CORESET, TCI state, or PUCCH resource for the transmission and reception of at least one of the following sets of channels in a given target CC:

- the PDCCH, the PDSCH, the PUCCH and the PUSCH, or
- the PDCCH and the PUCCH, or
- the PDSCH and the PUSCH or
- the PDCCH, the PDSCH and the PUSCH, or
- the PDSCH, the PUCCH and the PUSCH, or
- the PUCCH and the PUSCH.

In this method, along the same lines as the clarification before, 'applying the setting(s) to the PDCCH' may mean the application of the setting(s) to one or more CORESET(s) and 'applying the setting(s) to the PDSCH' may mean the application of the setting(s) to one or more receptions of PDSCH(s) (the PDSCH(s) may be activated/scheduled by any DCI format). Similarly, 'applying the setting(s) to the PUCCH' may mean the application of the setting(s) to one or more PUCCH resource(s) and 'applying the setting(s) to the PUSCH' may mean the application of the setting(s) to one or more transmissions of PUSCH(s).

Similar to common setting(s) indication in the cases of dual-connectivity, cross-carrier scheduling enabled CCs, the various sets of applicable channels(s) in a CC may vary.

Similarly, the default setting(s) may be obtained from reference resource(s) or TCI states depending on the type of CC. For example, the default setting(s) may be obtained from the reference TCI state(s) if the reference CC is not configured with control channels.

In accordance with an embodiment, the UE is configured to obtain the default setting(s) for one or more UL and/or DL channel(s) in a target CC from one or more reference TCI state(s) in the reference CC, if the reference CC is not configured with CORESETs or PUCCH resources or both. In general, this embodiment may apply when the reference CC is not configured with any control channel.

**Extension to Multi-TRP scenarios**

The above common and default setting(s) indication and application methods are applicable to single TRP scenarios where a UE communicates with a single TRP. In multi-TRP scenarios, multiple beams may be formed by the UE to communicate with multiple TRPs and multiple default and/or common beams for the UL and DL channels or RSs are needed.

*Common setting(s) indication in Multi-TRP scenarios*

In accordance with an embodiment, the UE is configured to receive, from a network node, a single explicit indication for at least one bandwidth part of at least one carrier component, CC, wherein the indication provides:

- one or more receive setting(s) for at least two Downlink, DL, channels, or one DL channel and one DL resource, or two DL resources, or

- one or more transmit setting(s) for at least two Uplink, UL, channels, or one UL channel and one UL resource, or two UL resources, or

- one or more transmit setting(s) for at least one DL channel and/or resource and one or more receive setting(s) for at least one UL channel and/or resource; wherein the setting(s) for said UL and/or DL channel(s) and/or resource(s) are received, from the network node, via a plurality of transmission configuration indication, TCI, configurations in the received single explicit indication, wherein a TCI configuration provides at least one reference Reference Signal (RS) or at least one reference resource along with an indication of transmission and/or reception parameter(s) to be derived or obtained from each one of RS(s) or the reference resource(s) provided by the TCI configuration(s).

In a typical example, the common setting(s) described above may be provided via a MAC-CE message, the DCI or any other higher layer. This variation of the common setting(s) indication may be provided, for example, when the UE is communicating with multiple TRPs in a CC. The application of the common setting(s), hence, differs from the methods described before in the disclosure.

In accordance with an embodiment, the UE is configured to apply two or more TCI configuration(s) provided to it using at least one of the following methods in a CC:

- the UE uses a first TCI configuration to obtain the transmit setting for the UL transmission of a first PUSCH scheduled by a DCI obtained from a CORESET with CORESET pool index $c_0$ and a second TCI configuration for the UL transmission of a second PUSCH scheduled by a DCI obtained from a CORESET with CORESET pool index $c_1$.
- the UE uses a first TCI configuration to obtain the receive setting for the DL reception of a first PDSCH scheduled by a DCI obtained from a CORESET with CORESET pool index $c_0$ and a second TCI configuration to obtain the receive setting for the DL reception of a second PDSCH scheduled by a DCI obtained from a CORESET with CORESET pool index $c_1$.
- the UE uses a first TCI configuration to obtain the transmit setting for the UL transmission of a first PUCCH resource indicated by a DCI obtained from a CORESET with CORESET pool index $c_0$ and a second TCI configuration to obtain the transmit setting for the UL transmission of a second PUCCH resource indicated by a DCI obtained from a CORESET with CORESET pool index $c_1$.
- the UE uses a first TCI configuration to obtain the transmit setting for the UL transmission of a first PUCCH resource configured with CORESET pool index $c_0$ and a second TCI configuration to obtain the transmit setting for the UL transmission of a second PUCCH resource configured with CORESET pool index $c_1$.

*Default setting(s) indication in multi-TRP scenarios*

Similar to the multi-TRP variation of the common setting(s) indication, the default setting(s) in the case of multi-TRP are discussed below according to some embodiments.

In accordance with an embodiment, the UE is configured to use or derive transmit setting(s) for the transmission of one or more UL channel(s) or resource(s) and/or the receive setting(s) for the reception of one or more DL channel(s) or resource(s) in one or more CC(s) from a plurality of CORESETs, or a plurality of TCI states, or a plurality of PUCCH resources that are associated with a CC. The CORESETs, TCI-states or PUCCH resources that are used to obtain or derive the transmit and/or receive setting(s) may be denoted as reference CORESETs, reference TCI-states, and reference PUCCH resources, respectively, in the following.

The CC from which the reference CORESETs, the reference TCI-states, or the reference PUCCH resources are present, or are to be taken from may be referred to as the 'reference CC'. The CC(s) of the UL and DL channel(s) or resource(s) to which the setting(s) are to be applied, which may be called as 'target CC(s)', may be indicated to the UE either via a higher layer or via a MAC-CE, or they are fixed in the NR specifications. The target CC(s) may be the reference CC only or a list of CCs (which may be provided to the UE via network node signaling or fixed in the NR specification) that includes the reference CC or the set of CCs that are in the same band as the reference CCs.

In a first example, the UE is configured or is provided with $n > 1$ reference CORESETs to obtain the transmit setting(s) for the transmission of said UL channel(s) or resource(s) and/or the receive setting(s) for the reception of said DL channel(s) or resource(s). The transmit and receive setting(s) may be obtained or derived from the RSs associated with the QCL setting(s) corresponding to the reference CORESETs in the reference CC. The UE may be configured with $n$ reference CORESETs, and the $n$ reference CORESETs may be associated with different CORESET pool index values. A given CORESET pool index value may be associated with a specific TRP. Therefore, the $n$ reference CORESETs may be associated with $n$ different CORESET pool index values and hence $n$ different TRPs. The $n$ reference CORESETs may be chosen based on their ID values. In one instance, the $n$ reference CORESETs that belong to $n$ different CORESET pool index values, each with the lowest ID or highest ID value in the given CORESET pool, is chosen. The CORESETs chosen may further be restricted according to the DL BWP (for example, the CORESETs only in the active DL BWP may be chosen). In another instance, the reference CORESETs may be the ones with the $n$ highest or $n$ lowest ID values in the active DL BWP of the reference CC.

In a second example, the UE is configured or is provided with $n > 1$ reference TCI states to obtain or derive the transmit and receive setting(s) for the transmission of said UL channel(s) and/or resource(s) and/or the reception of said DL channel(s) and/or resource(s). The transmit and receive setting(s) may be obtained or derived from the RSs associated with the QCL setting(s) associated with the reference TCI states. The $n$ reference TCI state(s) may be obtained using one of the following ways:

- the $n$ TCI states are given by one of the codepoints of the TCI field of a DCI (for instance, the $n > 1$ TCI states associated with the lowest codepoint of the TCI field with $n$ TCI states mapped to the codepoint),
- the $n$ active TCI state(s) or $n$ TCI state(s) with the highest or lowest ID values in the active DL BWP or any other DL BWP of the reference CC.

In a third example, the UE is configured or is provided with $n > 1$ reference PUCCH resources to obtain or derive the transmit setting(s) for the transmission of said UL channel(s) and/or resource(s) and/or the receive setting(s) for the reception of said DL channel(s) and/or resource(s). The transmit and receive setting(s) may be obtained or derived from the RSs used as a spatial relation or as a pathloss reference for the PUCCH resources. For instance, the $n$ reference PUCCH resources may be the PUCCH resources with the $n$ lowest or $n$ highest ID values in the active UL BWP of a reference CC. In another instance, the reference PUCCH resources may be the ones with indicated or specified/fixed PUCCH resource group ID values in the active UL BWP of the reference CC. In another instance, the reference PUCCH resources may be associated with $n$ different CORESET pool index values. From a set of PUCCH resources associated with the same CORESET pool index in the reference CC, a fixed PUCCH resource might be chosen as the reference PUCCH resource (for e.g., the PUCCH resource with the lowest or the highest ID value). The selection may also be restricted by the UL BWP in which the PUCCH resource is present.

### Default setting(s) for PUCCH

When multiple common or default setting(s) are to be maintained in a CC, the beam to be chosen for the transmission of a given PUCCH should be specified. The default setting for a PUCCH resource may be determined by the DCI indicating it (the DCI may comprise a PUCCH resource indicator field in case it schedules a PDSCH to indicate the PUCCH resource that carries the HARQ ACK/NACK for the scheduled PDSCH).

In accordance with an embodiment, the UE is configured with one of the following behaviors:

- the UE is configured to obtain or derive the transmit setting(s) for a first PUCCH resource in a CC from the QCL assumption(s) of a first CORESET configured with a first CORESET pool index value if the PDCCH indicating the PUCCH resource was transmitted on a CORESET with a first CORESET pool index value and the transmit setting(s) for a second PUCCH resource in the CC from the QCL assumption(s) of a second CORESET configured with a second CORESET pool index value if the PDCCH indicating the PUCCH resource was transmitted on a CORESET with a second CORESET pool index value (the CORESETs referred to here to obtain the QCL assumptions may be the reference CORESETs described above).

- the UE is configured to obtain or derive the transmit setting(s) for a first PUCCH resource in a CC from a first TCI state if the PDCCH indicating the PUCCH resource was transmitted on a CORESET with a first CORESET pool index value and the transmit setting(s) for a second PUCCH resource in the CC from a second TCI state if the PDCCH indicating the PUCCH resource was transmitted on a CORESET with a second CORESET pool index value (the TCI states referred to here may be the reference TCI states described above).

The association of a PUCCH with a CORESET pool index value may also determine the default setting to be chosen by the UE.

In accordance with an embodiment, the UE is configured to receive at least one PUCCH resource that has an association with a CORESET pool index value via a higher layer signaling, wherein the UE is configured with one of the following behaviors:

- the UE is configured to obtain or derive the transmit setting(s) for a PUCCH resource in a CC from the QCL assumption(s) of a CORESET that is configured with the same CORESET pool index value as the CORESET pool index value associated with the PUCCH resource.

- the UE is configured to obtain or derive the transmit setting(s) for a first PUCCH resource in a CC from a first reference TCI state if the PUCCH resource is configured with a first CORESET pool index value and to obtain or derive the transmit setting(s) for a second PUCCH resource in a CC from a second reference TCI state if the PUCCH resource is configured with a second CORESET pool index value.

- the UE is configured to obtain or derive the transmit setting(s) for a first PUCCH resource in a CC from a first reference PUCCH resource if the first PUCCH resource is configured with a first CORESET pool index value and to obtain or derive the transmit setting(s) for a second PUCCH resource in a CC from a second reference PUCCH resource if the second PUCCH resource is configured with a second CORESET pool index value.

**Default setting(s) for PDSCH**

In accordance with an embodiment, one of the following UE behaviors may be applicable:

- the receive setting(s) for a PDSCH scheduled in the target CC may be obtained or derived from a first reference TCI state, if the PDSCH is scheduled by a PDCCH transmitted on a CORESET associated with a first CORESET pool index value, and the receive setting(s) for a PDSCH in the target CC may be obtained or derived from a second reference TCI state, if the PDSCH is scheduled by a PDCCH transmitted on a CORESET associated with a second CORESET pool index value.- the receive setting(s) for a PDSCH scheduled in the target CC may be obtained or derived from a first reference PUCCH resource, if the PDSCH is scheduled by a PDCCH transmitted on a CORESET associated with a first CORESET pool index value, and the receive setting(s) for a PDSCH in the target CC may be obtained or derived from a second reference PUCCH resource, if the PDSCH is scheduled by a PDCCH transmitted on a CORESET associated with a second CORESET pool index value.
- the receive setting(s) for a PDSCH scheduled in the CC may be obtained or derived from a first reference CORESET associated with a first CORESET pool index value, if the PDSCH is scheduled by a PDCCH transmitted on a CORESET associated with the first CORESET pool index value, and the receive setting(s) for a PDSCH scheduled in the CC may be obtained or derived from a second reference CORESET associated with a second CORESET pool index value, if the PDSCH is scheduled by a PDCCH transmitted on a CORESET associated with the second CORESET pool index value.

The reference CORESETs may be associated with a reference CC that is configured with CORESETs. Some CCs may not be configured with control channel(s) or without CORESETs. Therefore, the reference TCI states may be provided from such CCs for the default setting(s).

In any of the aforementioned methods, the indication of the CCs to the UE for the application of the common or default setting(s) may be indicated in a MAC-CE message, or via a higher layer signaling, or the indication may be fixed in the NR specifications and hence known to the UE.

In one example, if one or more channel(s) and/or resource(s) in a CC are provided with a beam indication or a default/common beam is provided for two or more channel(s) and/or resource(s) in a CC, then all the CCs that are a part of the same band may also be applied with said beam for said channel(s) - intra-band beam indication. In another example, via a higher layer signaling a list of CCs may be provided to the UE for which the same beam setting(s) may be applied. When a MAC-CE intended for one of the CC(s) in the list is received by the UE, the UE applies the setting(s) in the TCI state(s) indicated in the MAC-CE to said channel(s) and/or resource(s) in all the CC(s) in the list.

**Common TCI state framework for UL and DL**

In this subsection, a TCI configuration that may be used to indicate reception setting(s) for a DL reception or the transmission setting(s) for a UL transmission or both is presented. This TCI configuration may be used in the common or default setting(s) indication methods described above.

In accordance with an embodiment, the UE is configured to receive, from a network node, a configuration of a TCI state via a higher layer that provides one or more RSs and/or reference resources, wherein each RS or reference resource is associated with a QCL setting, or a quasi-QCL setting and one or more additional setting(s). The TCI configuration may also comprise one or more additional setting(s) that are not specifically associated with the reference signal(s) or reference resource(s) it comprises. A QCL setting is associated with a reference RS or reference resource and may comprise one or more QCL types that indicate the derivation of one or more receive setting(s) for a DL reception and/or the derivation of transmission parameter(s)/setting(s) for an UL transmission. The reception setting(s) indicated for the derivation, calculation, or evaluation from a reference RS or resource for a DL reception may be at least one of the following: Doppler shift, Doppler spread, average delay, delay spread, spatial filter. The transmit setting(s) indicated for an UL transmission may be at least one of the following: spatial relation, pathloss estimate. The additional setting(s) associated with a reference signal or reference resource may provide at least one of the following: a spatial relation-related indication, a pathloss reference or pathloss estimate related indication. The additional setting(s) in the TCI configuration, in general, provide at least one of the following: a spatial relation-related indication, a pathloss reference or pathloss estimate related indication, a transmit-port(s)-related indication, a transmit power related indication providing at least one of the following parameters that are used to calculate a transmit power: alpha, p0, closed loop power control ID.

In a first example, the QCL setting may be similar to the one in the NR specifications [3] wherein the QCL setting provides one or more QCL type values (e.g., QCL types 'A', 'B', 'C' and 'D') to indicate to the UE the reception setting(s) that may be obtained/derived from a given reference signal or reference resource for a DL reception. The additional setting(s) may provide a spatial relation indication and/or a pathloss reference RS indication with respect to one or more reference signals or reference resources in the TCI configuration for an UL transmission. The additional setting(s) may also comprise a transmit-port indication and/or a transmit-power related indication for an UL transmission.

In a second example, a QCL setting may contain (possibly in addition to the QCL types 'A', 'B', 'C' and 'D' for DL receptions) one or more QCL type values (e.g., QCL types 'E', 'F', and 'G') to indicate to the UE transmission parameter(s) that may be obtained/derived from a given reference signal or reference resource for an UL transmission. For example, QCL type 'E' may indicate that the UE may use the given reference signal or reference resource to obtain/derive a spatial relation for an UL transmission. For example, QCL type 'F' may indicate that the UE may use the given reference signal or reference resource to obtain/derive a pathloss estimate for an UL transmission. For example, QCL type 'G' may indicate that the UE may use a given reference signal or reference resource to obtain/derive a spatial relation and a pathloss estimate for an UL transmission.

In a third example, a QCL setting may contain a QCL type value 'X' may indicate that the UE may use a given reference signal or reference resource to obtain/derive receive setting(s) for a DL reception and one or more transmission parameter(s) or transmit setting(s) for an UL transmission. In one instance, from a reference signal or reference resource that is set with QCL type 'X1', the UE may be configured to derive a spatial filter for a DL reception (similar to QCL type 'D' in the NR specifications), the spatial filter for an uplink transmission and a pathloss estimate for an UL transmission. In another instance, from a reference signal or reference resource that is set with QCL type 'X2', the UE may be configured to derive the Doppler shift, Doppler spread, average delay and delay spread for a DL reception (similar to QCL type 'A' in the NR specifications) and a pathloss estimate for an UL transmission.

In a fourth example, the TCI configuration may provide the reception setting(s) for a DL reception to be derived or obtained from a reference signal or reference resource in the QCL setting associated with the reference signal or reference resource, and the additional setting may be a separate QCL setting that includes one or more QCL types that provide one or more UL transmission parameters/settings (such as spatial relation and pathloss reference, etc., for example) to be derived from a reference signal or reference resource for an UL transmission.

A configuration of a TCI described above may also be called as a TCI-state in the following.

In accordance with an embodiment, the application of a TCI state for the reception of a DL channel/resource and/or for the transmission of an UL channel/resource implies the application of the QCL setting(s) with respect to at least one reference signal or reference resource indicated in the TCI state and/or any other settings provided in the TCI state for the reception of said DL channel/resource and/or for the transmission of said channel/resource.

In accordance with an embodiment, the RSs or the reference resources provided in the TCI-state may be at least one of the following: a CSI-RS resource, an SSB, an SRS resource or SRS resource set, a CORESET, a PUCCH resource. It is to be noted that CSI-RS, SSB and SRS may be classified as reference signals and CORESETs and PUCCH resources may be classified as reference resources.

If a QCL type $Q_i$ is indicated for a reference signal or a reference resource in the TCI state, and the TCI state is applied for a DL reception and/or an UL transmission, the reception setting(s) corresponding to the QCL type $Q_i$ for a DL reception and/or the transmission parameter(s) or setting(s) corresponding to the QCL type $Q_i$ for an UL transmission may be derived/obtained from at least one of the following:

- said RS,
- a RS associated with the QCL setting(s) corresponding to said reference resource,
- a RS associated as a pathloss reference RS or as a spatial relation with said RS or reference resource.

For example, from a RS or reference resource that is set with QCL type $Q_i$, the UE may be configured to derive the Doppler shift, Doppler spread, average delay and delay spread for a downlink reception (similar to QCL type 'A' in the NR specifications) and a pathloss estimate for an uplink transmission. If the associated reference resource is a PUCCH resource (or an SRS resource or an SRS resource set), the Doppler shift, Doppler spread, average delay and delay spread for a downlink reception and a pathloss estimate for an uplink transmission, when the TCI state is applied for a downlink reception and/or an uplink transmission, may be derived from either the reference signal used as a spatial relation or from the reference signal used as a pathloss reference for the PUCCH resource (or the SRS resource or the SRS resource set or an SRS resource in the SRS resource set). In another instance, if the associated reference signal is a CSI-RS resource, the Doppler shift, Doppler spread, average delay and delay spread for a downlink reception and a pathloss estimate for an uplink transmission, when the TCI state is applied for a downlink reception and/or an uplink transmission, may be derived from the CSI-RS resource. In a third instance, if the associated reference resource is a CORESET, the Doppler shift, Doppler spread, average delay and delay spread for a downlink reception and a pathloss estimate for an uplink transmission, when the TCI state is applied for a downlink reception and/or an uplink transmission, may be derived from one of the resource(s) (for example, the RS configured with QCL type 'D' or QCL type 'A') in the QCL setting(s) corresponding to the CORESET.

Any mention of a TCI state or a TCI information element or configuration in this disclosure, may refer to the TCI state or information element or configuration as described in the NR specifications or the TCI state as described in the embodiments above.

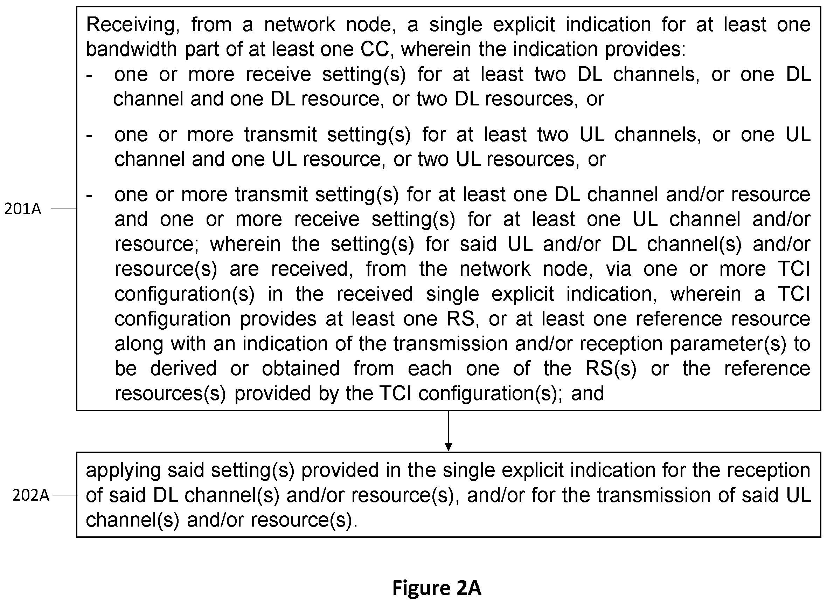

Referring to **Figure 2A,** there is provided a method performed by a UE, summarizing some of the embodiments previously described: As shown, the method comprises:

- (201A) receiving, from a network node, a single explicit indication for at least one bandwidth part of at least one CC, wherein the indication provides:

  - one or more receive setting(s) for at least two DL channels, or one DL channel and one DL resource, or two DL resources, or
  - one or more transmit setting(s) for at least two UL channels, or one UL channel and one UL resource, or two UL resources, or
  - one or more transmit setting(s) for at least one DL channel and/or resource and one or more receive setting(s) for at least one UL channel and/or resource; wherein the setting(s) for said UL and/or DL channel(s) and/or resource(s) are received, from the network node, via one or more TCI configuration(s) in the received single explicit indication, wherein a TCI configuration provides at least one RS, or at least one reference resource along with an indication of the transmission and/or reception parameter(s) to be derived or obtained from each one of the RS(s) or the reference resources(s) provided by the TCI configuration(s), and

- (202A) applying said setting(s) provided in the single explicit indication for the reception of said DL channel(s) and/or resource(s), and/or for the transmission of said UL channel(s) and/or resource(s).

As previously described, according to an embodiment, the transmit setting(s) for an UL transmission or UL transmission parameter(s) indicate one or more of the following parameters or setting(s) of an UL transmission: spatial relation/Transmit, Tx, spatial filter/Tx beam direction, pathloss reference RS, or pathloss reference resource, port(s) to be used by the UE for the transmission, closed loop power control indication, parameters alpha, p0; and wherein receive setting(s) for a DL reception indicates setting(s) that provide(s) one or more reference RS(s) or reference resource(s) for the derivation of one or more of the following parameters: Doppler shift, Doppler spread, average delay, delay spread, Rx spatial filter/Rx beam direction.

According to an embodiment, said setting(s) to be derived from the reference RS in the TCI configuration for said channel(s) and/or resource(s) is/are indicated to the UE via QCL setting(s) in the TCI configuration.

As previously disclosed, the single explicit indication is received from the network node, via a MAC-CE message, or via a physical layer such as a DCI message, and wherein the MAC-CE message or the DCI message comprises or refers to one or more identities (IDs), of TCI(s) states or information element(s) (IEs) configured to the UE by the network node.

As previously described, the method further comprises applying the transmit or receive settings provided by the MAC-CE to at least one of the following:

- PDSCH(s) scheduled by the DCI without a TCI field at least in the CC;
- PUSCH(s) scheduled at least in the CC via a higher layer configured grant or a PUSCH scheduled at least in the CC via the DCI without an SRI field or a DCI that has an SRI field with 0 bits;
- one or more CORESETs in the active DL BWP of at least the CC, or one or more CORESETs in the active DL BWP of at least the CC configured with a CORESET pool index 0 or without any CORESET pool index value

- one or more PUCCH resources in the active UL BWP of at least the CC, or one or more PUCCH resources in the active UL BWP of at least the CC, that are configured with CORESET pool index 0 or without any CORESET pool index value.

According to another embodiment, the method performed by the UE, comprises, applying the transmit or receive settings provided by the MAC-CE to at least one of the following:

- a PDCCH, a PDSCH, a PUCCH, and a PUSCH, or
- a PDCCH and the PUCCH, or
- a PDSCH and the PUSCH, or
- a PDCCH, a PUCCH and PUSCH, or
- a PDSCH, a PUCCH and a PUSCH, or
- a PUCCH and a PUSCH.

According to another embodiment, previously described, the method further comprises, applying two or more TCI configurations using at least one of the following methods in a CC:

- using a first TCI configuration to obtain the transmit setting for the UL transmission of a first PUSCH scheduled by a DCI obtained from a CORESET with CORESET pool index $c_0$ and a second TCI configuration for the UL transmission of a second PUSCH scheduled by a DCI obtained from a CORESET with CORESET pool index $c_1$,
- using a first TCI configuration to obtain the receive setting for the DL reception of a first PDSCH scheduled by a DCI obtained from a CORESET with CORESET pool index $c_0$ and a second TCI configuration to obtain the receive setting for the DL reception of a second PDSCH scheduled by a DCI obtained from a CORESET with CORESET pool index $c_1$,
- using a first TCI configuration to obtain the transmit setting for the UL transmission of a first PUCCH resource indicated by a DCI obtained from a CORESET with CORESET pool index $c_0$ and a second TCI configuration to obtain the transmit setting for the UL transmission of a second PUCCH resource indicated by a DCI obtained from a CORESET with CORESET pool index $c_1$,
- using a first TCI configuration to obtain the transmit setting for the UL transmission of a first PUCCH resource configured with CORESET pool index $c_0$ and a second TCI configuration to obtain the transmit setting for the UL transmission of a second PUCCH resource configured with CORESET pool index $c_1$.

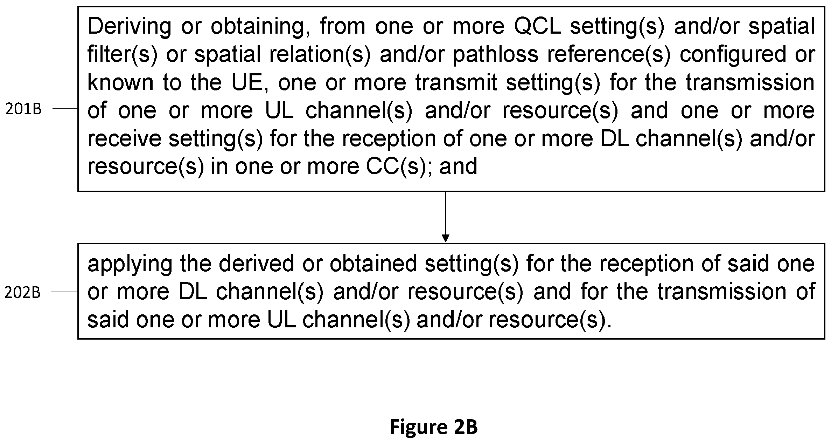

Referring to **Figure 2B,** there is provided a method performed by a UE, summarizing some of the embodiments previously described. As shown, the method comprises:

- (201B) deriving or obtaining, from one or more QCL setting(s) and/or spatial filter(s) or spatial relation(s) and/or pathloss reference(s) configured or known to the UE, one or more transmit setting(s) for the transmission of one or more UL channel(s) and/or resource(s) and one or more receive setting(s) for the reception of one or more DL channel(s) and/or resource(s) in one or more CC(s); and

- (202B) applying the derived or obtained setting(s) for the reception of said one or more DL channel(s) and/or resource(s) and for the transmission of said one or more UL channel(s) and/or resource(s).

The QCL setting(s) and/or spatial filter(s) or spatial relation(s) and/or pathloss reference(s) are taken from known or indicated RS(s) or reference resource(s) or from known or indicated TCI state(s).

According to an embodiment, the setting(s) for the transmission of said UL channel(s) and/or resources and the reception of said one or more DL channel(s) and/or resource(s) is/are obtained from the QCL setting(s) in the active TCI state with the lowest ID in an active DL BWP of a CC.

According to another embodiment, the setting(s) for the transmission of said UL channel(s) and/or resources and the reception of said one or more DL channel(s) and/or resource(s) is/are obtained from the QCL setting(s) of one or more CORESET(s) in an active DL BWP of a CC. The setting(s) is/are obtained from the QCL setting(s) of the CORESET with the lowest ID in the active DL BWP of the CC.

Additional embodiments of the method performed by the UE have been previously presented and need not be repeated.

In order to perform the previously described process or method steps performed by the UE there is also provided a UE. **Figure 3** illustrates a block diagram depicting a UE 300. The UE 300 comprises a processor 310 or processing circuit or a processing module or a processor or means 310; a receiver circuit or receiver module 340; a transmitter circuit or transmitter module 350; a memory module 320, a transceiver circuit or transceiver module 330 which may include the transmitter circuit 350 and the receiver circuit 340. The UE 300 further comprises an antenna system 360 which includes antenna circuitry for transmitting and receiving signals to/from at least the network node. The antenna system employs beamforming as previously described. The actions performed by the UE have already been described.

The UE 300 may belong to any radio access technology including 4G or LTE, LTE-A, 5G, advanced 5G or a combination thereof that support beamforming technology. The UE comprising the processor and the memory contains instructions executable by the processor, whereby the UE 300 is operative or is configured to perform any one of the embodiments related to the UE previously described.

The processing module/circuit 310 includes a processor, microprocessor, an application specific integrated circuit (ASIC), field programmable gate array (FPGA), or the like, and may be referred to as the "processor." The processor 310 controls the operation of the network node and its components. Memory (circuit or module) 320 includes a random-access memory (RAM), a read only memory (ROM), and/or another type of memory to store data and instructions that may be used by processor 310. In general, it will be understood that the network node in one or more embodiments includes fixed or programmed circuitry that is configured to carry out the operations in any of the embodiments disclosed herein.

In at least one such example, the processor 310 includes a microprocessor, microcontroller, DSP, ASIC, FPGA, or other processing circuitry that is configured to execute computer program instructions from a computer program stored in a non-transitory computer-readable medium that is in or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed in this disclosure relating to the UE. Further, it will be appreciated that the UE 300 may comprise additional components.

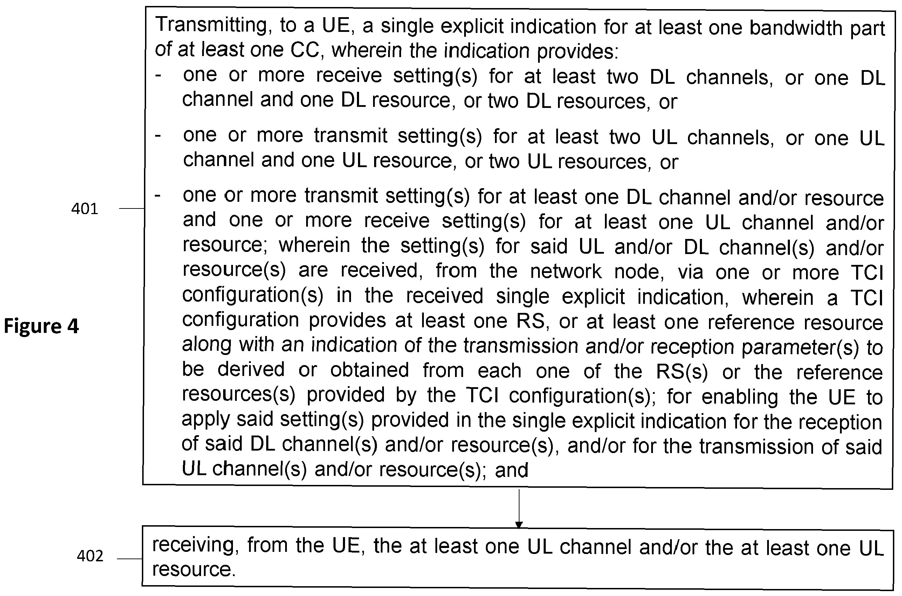

Referring to **Figure 4,** there is provided a method performed by a network node or gNB according to some embodiments previously described: As shown, the method comprises:

- (401) transmitting, to the UE, a single explicit indication for at least one bandwidth part of at least one carrier component, CC, wherein the indication provides:

  - one or more receive setting(s) for at least two Downlink, DL, channels, or one DL channel and one DL resource, or two DL resources, or
  - one or more transmit setting(s) for at least two Uplink, UL, channels, or one UL channel and one UL resource, or two UL resources, or
  - one or more transmit setting(s) for at least one DL channel and/or resource and one or more receive setting(s) for at least one UL channel and/or resource; wherein the setting(s) for said UL and/or DL channel(s) and/or resource(s) are transmitted, from the network node (500), to the UE (300) via one or more transmission configuration indication, TCI, configuration(s), wherein a TCI configuration provides at least one reference Reference Signal, RS, or at least one reference resource along with an indication of the transmission and/or reception parameter(s) to be derived or obtained from each one of them, for enabling the UE to apply said settings provided in the single explicit indication for the reception of said one or more DL channel(s) or resource(s) and/or for the transmission of said one or more UL channel(s) and/or resource(s); and

- (402) receiving, from the UE, the at least one UL channel and/or the at least one UL resource.

Additional actions performed by the network node have already been described.

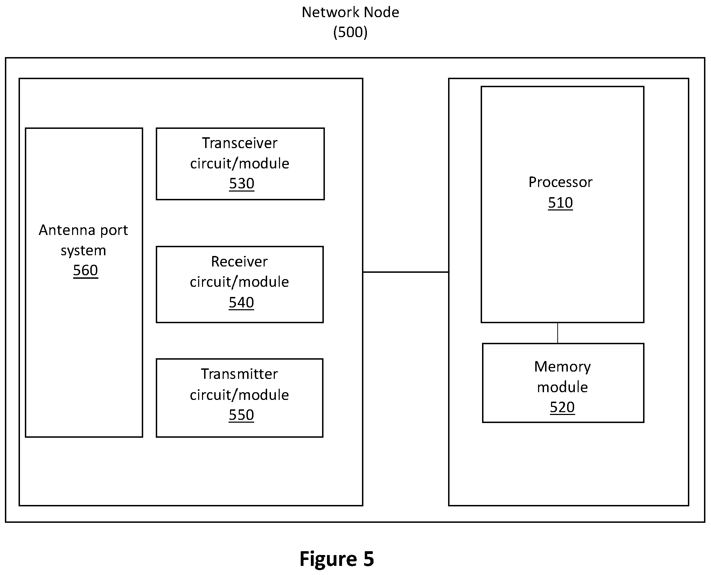

In order to perform the previously described process or method steps performed by the network node, there is also provided a network node (or gNB). **Figure 5** illustrates an exemplary block diagram of a network node 500. The network node 500 comprises a processor 510 or processing circuit or a processing module or a processor or means 510; a receiver circuit or receiver module 540; a transmitter circuit or transmitter module 550; a memory module 520, a transceiver circuit or transceiver module 530 which may include the transmitter circuit 550 and the receiver circuit 540. The network node 500 further comprises an antenna system 560 which includes antenna circuitry for transmitting and receiving signals to/from at least the UE. The antenna system 560 employs beamforming as previously described. The actions performed by the network node 500 have already been described. The network node 500 may also be viewed as a TRP.

The processing module/circuit 510 includes a processor, microprocessor, an application specific integrated circuit (ASIC), field programmable gate array (FPGA), or the like, and may be referred to as the "processor." The processor 510 controls the operation of the network node and its components. Memory (circuit or module) 520 includes a random-access memory (RAM), a read only memory (ROM), and/or another type of memory to store data and instructions that may be used by processor 510. In general, it will be understood that the network node in one or more embodiments includes fixed or programmed circuitry that is configured to carry out the operations in any of the embodiments disclosed herein.

In at least one such example, the processor 510 includes a microprocessor, microcontroller, DSP, ASIC, FPGA, or other processing circuitry that is configured to execute computer program instructions from a computer program stored in a non-transitory computer-readable medium that is in or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed in this disclosure. Further, it will be appreciated that the network node 500 may comprise additional components.

The network node 500 may belong to any radio access technology including 4G or LTE, LTE-A, 5G, advanced 5G or a combination thereof that support beamforming technology. The network node 500 comprising the processor and the memory contains instructions executable by the processor, whereby the network node 500 is operative or is configured to perform any one of the subject-matter presented in this disclosure related to the network node (or gNB).

Several advantages of the described embodiments in this disclosure are achieved as previously described and which include reduction of higher layer control information overhead, lower latency, and enhancement in dynamic indication of beam settings for beam management.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

Throughout this disclosure, the word "comprise" or "comprising" has been used in a nonlimiting sense, i.e. meaning "consist at least of". Although specific terms may be employed herein, they are used in a generic and descriptive sense only and not for purposes of limitation. The embodiments herein may be applied in any wireless systems including LTE or 4G, LTE-A (or LTE-Advanced), 5G, advanced 5G, WiMAX, WiFi, satellite communications, TV broadcasting etc.

## REFERENCES

[1] 3GPP TS 38.211 V16.0.0: "3GPP; TSG RAN; NR; Physical channels and modulation (Rel. 16)," Jan. 2020.
[2] 3GPP TS 38.212 V16.0.0: "3GPP; TSG RAN; NR; Multiplexing and channel coding (Rel. 16)," Jan. 2020.
[3] 3GPP TS 38.213 V16.0.0: "3GPP; TSG RAN; NR; Physical layer procedures for control (Rel. 16)," Jan. 2020.
[4] 3GPP TS 38.214 V16.0.0: "3GPP; TSG RAN; NR; Physical layer procedures for data (Rel. 16)," Jan. 2020.
[5] 3GPP TS 38.321 V15.8.0: "3GPP; TSG RAN; NR; Medium Access Control (MAC) protocol specification (Rel. 15)," Jan. 2020.
[6] 3GPP TS 38.331 V15.8.0: "3GPP; TSG RAN; NR; Radio Resource Control (RRC); Protocol specification (Rel. 15)," Jan. 2020.
[7] 3GPP TS 38.101-1 V16.2.0: "3GPP; TSG RAN; User Equipment (UE) radio transmission and reception; Part 1: Range 1 Standalone (Rel. 16)," Jan. 2020.
[8] 3GPP TS 38.101-2 V16.2.0: "3GPP; TSG RAN; User Equipment (UE) radio transmission and reception; Part 2: Range 2 Standalone (Rel. 16)," Jan. 2020.

**Claims**

1. A method performed by a User Equipment, UE, (300) the method comprising:

   - deriving or obtaining (201B), from one or more Quasi-Co-Location, QCL, setting(s) and/or spatial filter(s) or spatial relation(s) and/or pathloss reference(s) configured or known to the UE (300), one or more transmit setting(s) for the transmission of one or more Uplink, UL, channel(s) and/or resource(s) and one or more receive setting(s) for the reception of one or more Downlink, DL, channel(s) and/or resource(s) in one or more Carrier Components, CC(s); and
   - applying (202B) the derived or obtained setting(s) for the reception of said one or more DL channel(s) and/or resource(s) and for the transmission of said one or more UL channel(s) and/or resource(s).

2. The method according to claim 1, wherein the QCL setting(s) and/or spatial filter(s) or spatial relation(s) and/or pathloss reference(s) are taken from known or indicated reference Signals(s), RS(s), or reference resource(s) or from known or indicated transmission configuration indication, TCI, state(s).

**3.** The method according to claim 1 or claim 2, wherein the setting(s) for the transmission of said UL channel(s) and/or resources and the reception of said one or more DL channel(s) and/or resource(s) is/are obtained from the QCL setting(s) in the active TCI state with the lowest identity, ID, in an active DL Bandwidth Part, BWP, of a CC.

**4.** The method according to claim 2 or claim 3, wherein the setting(s) for the transmission of said UL channel(s) and/or resources and the reception of said one or more DL channel(s) and/or resource(s) is/are obtained from the QCL setting(s) of one or more Control Resource Set(s), CORESET(s), in an active DL BWP of a CC.

**5.** The method according to any one of claims 4, wherein the setting(s) is/are obtained from the QCL setting(s) of the CORESET with the lowest ID in the active DL BWP of the CC.

**6.** A method performed by a User Equipment, UE, (300) the method comprising:

- receiving (201A), from a network node (500), a single explicit indication for at least one bandwidth part of at least one CC, wherein the indication provides:

  - one or more receive setting(s) for at least two DL channels, or one DL channel and one DL resource, or two DL resources, or
  - one or more transmit setting(s) for at least two UL channels, or one UL channel and one UL resource, or two UL resources, or
  - one or more transmit setting(s) for at least one DL channel and/or resource and one or more receive setting(s) for at least one UL channel and/or resource; wherein the setting(s) for said UL and/or DL channel(s) and/or resource(s) are received, from the network node (500), via one or more TCI configuration(s) in the received single explicit indication, wherein a TCI configuration provides at least one reference RS or at least one reference resource along with an indication of transmission and/or reception parameter(s) to be derived or obtained from each one of the RS(s) or the reference resources(s) provided by the TCI configuration(s), and

- applying (202A) said setting(s) provided in the single explicit indication for the reception of said DL channel(s) and/or resource(s), and/or for the transmission of said UL channel(s) and/or resource(s).

**7.** The method according to claim 6 wherein said transmit setting(s) for an UL transmission or UL transmission parameter(s) indicate one or more of the following parameters or setting(s) of an UL transmission: spatial relation/Transmit, Tx, spatial filter/Tx beam direction, pathloss reference, RS, or pathloss reference resource, port(s) to be used by the UE for the transmission, closed loop power control indication, parameters alpha, p0; and wherein receive setting(s) for a DL reception indicates setting(s) that provide(s) one or more reference RS(s) or reference resource(s) for the derivation of one or more of the following parameters: Doppler shift, Doppler spread, average delay, delay spread, Rx spatial filter/Rx beam direction.

**8.** The method according to claim 7 wherein said setting(s) to be derived from the reference RS in the TCI configuration for said channel(s) and/or resource(s) is/are indicated to the UE (300) via QCL setting(s) in the TCI configuration.

**9.** The method according to any one of claims 6-8 wherein the single explicit indication is received from the network node (500), via a Medium Access Control - Control Element, MAC-CE message, or via a physical layer such as a Downlink Control Information, DCI, message, and wherein the MAC-CE message or the DCI message comprises or refers to one or more identities, IDs, of TCI(s) states or information element(s), IEs, configured to the UE (300) by the network node (500).

**10.** The method according to claim 9, comprises, applying the transmit or receive settings provided by the MAC-CE for the at least one CC, to at least one of the following:

- Physical Downlink Shared Channel(s), PDSCH(s), scheduled by DCI(s) without a TCI field at least in the CC,
- Physical Uplink Shared Channel(s), PUSCH(s), scheduled at least in the CC via a higher layer configured grant or a PUSCH scheduled at least in the CC via the DCI without an SRI field or a DCI that has an SRI field with 0 bits,
- one or more Control Resource Sets, CORESETs, in the active DL BWP of at least the CC, or one or more CORESETs in the active DL BWP of at least the CC configured with a CORESET pool index 0 or without any CORESET pool index value,

- one or more Physical Uplink Control Channel, PUCCH, resources in the active UL BWP of at least the CC, or one or more PUCCH resources in the active UL BWP of at least the CC, that are configured with CORESET pool index 0 or without any CORESET pool index value.

11. The method according to claim 9, comprises, applying the transmit or receive settings provided by the MAC-CE to at least one of the following:

- the Physical Downlink Control Channel, PDCCH, the PDSCH, the PUCCH, and the PUSCH; or
- the PDCCH and the PUCCH, or
- the PDSCH and the PUSCH; or
- the PDCCH, the PUCCH and the PUSCH; or
- the PDSCH, the PUCCH and the PUSCH; or
- the PUCCH and the PUSCH.

12. The method according to claim 11 further comprises, applying two or more TCI configurations using at least one of the following methods in a CC:

- using a first TCI configuration to obtain the transmit setting for the UL transmission of a first PUSCH scheduled by a DCI obtained from a CORESET with CORESET pool index $c_0$ and a second TCI configuration for the UL transmission of a second PUSCH scheduled by a DCI obtained from a CORESET with CORESET pool index $c_1$,
- using a first TCI configuration to obtain the receive setting for the DL reception of a first PDSCH scheduled by a DCI obtained from a CORESET with CORESET pool index $c_0$ and a second TCI configuration to obtain the receive setting for the DL reception of a second PDSCH scheduled by a DCI obtained from a CORESET with CORESET pool index $c_1$,
- using a first TCI configuration to obtain the transmit setting for the UL transmission of a first PUCCH resource indicated by a DCI obtained from a CORESET with CORESET pool index $c_0$ and a second TCI configuration to obtain the transmit setting for the UL transmission of a second PUCCH resource indicated by a DCI obtained from a CORESET with CORESET pool index $c_1$,
- using a first TCI configuration to obtain the transmit setting for the UL transmission of a first PUCCH resource configured with CORESET pool index $c_0$ and a second TCI configuration to obtain the transmit setting for the UL transmission of a second PUCCH resource configured with CORESET pool index $c_1$.

13. A user equipment, UE, (300) comprising a processor (310) and a memory (320) containing instructions executable by the processor (310), whereby said UE (300) is operative to perform any one of the subject-matter of method claims 1-12.

14. A method performed by a network node (500), the method comprising:

- transmitting (401), to the UE (300), a single explicit indication for at least one bandwidth part of at least one carrier component, CC, wherein the indication provides:

  - one or more receive setting(s) for at least two Downlink, DL, channels, or one DL channel and one DL resource, or two DL resources, or
  - one or more transmit setting(s) for at least two Uplink, UL, channels, or one UL channel and one UL resource, or two UL resources, or
  - one or more transmit setting(s) for at least one DL channel and/or resource and one or more receive setting(s) for at least one UL channel and/or resource; wherein the setting(s) for said UL and/or DL channel(s) and/or resource(s) are transmitted, from the network node (500), to the UE (300) via one or more transmission configuration indication, TCI, configuration(s), wherein a TCI configuration provides at least one reference RS or at least one reference resource along with an indication of transmission and/or reception parameter(s) to be derived or obtained from each one of the RS(s) or the reference resources(s) provided by the TCI configuration(s), for enabling the UE to apply said settings provided in the single explicit indication for the reception of said one or more DL channel(s) or resource(s) and/or for the transmission of said one or more UL channel(s) and/or resource(s); and

- receiving, from the UE (402), the at least one UL channel and/or the at least one UL resource.

15. A network node (500) comprising a processor (510) and a memory (520) containing instructions executable by the processor (510), whereby said network node (500) is operative to perform the subject-matter of claim 14.

**Figure 1**

100

Other Network(s) such as Internet

CN 110

backhaul
111

RAN 120

121
gNB1
UE2 121B
IoT 121C
gNBs 121E
Core 121D
UE1 121A

122
gNB2
UE4 122B
IoT 122C
gNBs 122E
Core 122D
UE3 122A

123
gNB3
UE6 123B
IoT 123C
gNBs 123E
Core 123D
UE5 123A

201A —
Receiving, from a network node, a single explicit indication for at least one bandwidth part of at least one CC, wherein the indication provides:

- one or more receive setting(s) for at least two DL channels, or one DL channel and one DL resource, or two DL resources, or

- one or more transmit setting(s) for at least two UL channels, or one UL channel and one UL resource, or two UL resources, or

- one or more transmit setting(s) for at least one DL channel and/or resource and one or more receive setting(s) for at least one UL channel and/or resource; wherein the setting(s) for said UL and/or DL channel(s) and/or resource(s) are received, from the network node, via one or more TCI configuration(s) in the received single explicit indication, wherein a TCI configuration provides at least one RS, or at least one reference resource along with an indication of the transmission and/or reception parameter(s) to be derived or obtained from each one of the RS(s) or the reference resources(s) provided by the TCI configuration(s); and

202A —
applying said setting(s) provided in the single explicit indication for the reception of said DL channel(s) and/or resource(s), and/or for the transmission of said UL channel(s) and/or resource(s).

**Figure 2A**

201B — Deriving or obtaining, from one or more QCL setting(s) and/or spatial filter(s) or spatial relation(s) and/or pathloss reference(s) configured or known to the UE, one or more transmit setting(s) for the transmission of one or more UL channel(s) and/or resource(s) and one or more receive setting(s) for the reception of one or more DL channel(s) and/or resource(s) in one or more CC(s); and

202B — applying the derived or obtained setting(s) for the reception of said one or more DL channel(s) and/or resource(s) and for the transmission of said one or more UL channel(s) and/or resource(s).

**Figure 2B**

User Equipment
UE (300)

Antenna port
system
360

Transceiver
circuit/module
330

Receiver
circuit/module
340

Transmitter
circuit/module
350

Processor
310

Memory
module
320

**Figure 3**

EP 3 989 458 A1

**Figure 4**

401 —

Transmitting, to a UE, a single explicit indication for at least one bandwidth part of at least one CC, wherein the indication provides:

- one or more receive setting(s) for at least two DL channels, or one DL channel and one DL resource, or two DL resources, or

- one or more transmit setting(s) for at least two UL channels, or one UL channel and one UL resource, or two UL resources, or

- one or more transmit setting(s) for at least one DL channel and/or resource and one or more receive setting(s) for at least one UL channel and/or resource; wherein the setting(s) for said UL and/or DL channel(s) and/or resource(s) are received, from the network node, via one or more TCI configuration(s) in the received single explicit indication, wherein a TCI configuration provides at least one RS, or at least one reference resource along with an indication of the transmission and/or reception parameter(s) to be derived or obtained from each one of the RS(s) or the reference resources(s) provided by the TCI configuration(s); for enabling the UE to apply said setting(s) provided in the single explicit indication for the reception of said DL channel(s) and/or resource(s), and/or for the transmission of said UL channel(s) and/or resource(s); and

402 —

receiving, from the UE, the at least one UL channel and/or the at least one UL resource.

Network Node
(500)

Antenna port
system
560

Transceiver
circuit/module
530

Receiver
circuit/module
540

Transmitter
circuit/module
550

Processor
510

Memory
module
520

**Figure 5**

Europäisches
Patentamt

European
Patent Office

Office européen
des brevets

# EUROPEAN SEARCH REPORT

Application Number

EP 20 20 3142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERICSSON: "On beam indication, measurement, and reporting", 3GPP DRAFT; R1-1716350 ON BEAM INDICATION, MEASUREMENT, AND REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Nagoya, Japan; 20170918 - 20170921 17 September 2017 (2017-09-17), XP051339805, Retrieved from the Internet: URL:http://www.3gpp.org/ftp/Meetings_3GPP_SYNC/RAN1/Docs/ [retrieved on 2017-09-17] | 1,2,6-9, 11,13-15 | INV. H04B7/06 H04B7/08 H04L5/00 |
| Y | * pages 3-7 * | 3-5 | |
| X | NTT DOCOMO ET AL: "Discussion on multi-beam operation", 3GPP DRAFT; R1-2006951, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20200817 - 20200828 10 August 2020 (2020-08-10), XP051918424, Retrieved from the Internet: URL:https://ftp.3gpp.org/tsg_ran/WG1_RL1/T SGR1_102-e/Docs/R1-2006951.zip R1-2006951.docx [retrieved on 2020-08-10] | 6-9,11, 13-15 | TECHNICAL FIELDS SEARCHED (IPC) H04B H04L |
| Y | * page 2 - page 4 * | 3-5 | |

-/--

The present search report has been drawn up for all claims

| Place of search | Date of completion of the search | Examiner |
|---|---|---|
| Munich | 29 April 2021 | Franz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

Application Number

EP 20 20 3142

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MODERATOR (SAMSUNG): "Moderator summary#2 for multi-beam enhancement: proposal categorization", 3GPP DRAFT; R1-2007189, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20200817 - 20200828 27 August 2020 (2020-08-27), XP051922607, Retrieved from the Internet: URL:https://ftp.3gpp.org/tsg_ran/WG1_RL1/TSGR1_102-e/Docs/R1-2007189.zip R1-2007189 R17 FeMIMO summary2 Item 1 category.docx [retrieved on 2020-08-27] | 6-11, 13-15 | |
| Y | * pages 2-3, 12 * * page 19 - page 22 * | 12 | |
| A | NOKIA ET AL: "Remaining issues on beam management", 3GPP DRAFT; R1-1805104, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, P.R. China; 20180416 - 20180420 15 April 2018 (2018-04-15), XP051427363, Retrieved from the Internet: URL:http://www.3gpp.org/ftp/Meetings%5F3GPP%5FSYNC/RAN1/Docs/ [retrieved on 2018-04-15] * page 9 - page 10 * | 10 | TECHNICAL FIELDS SEARCHED (IPC) |

-/--

The present search report has been drawn up for all claims

| Place of search | Date of completion of the search | Examiner |
|---|---|---|
| Munich | 29 April 2021 | Franz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

| | Europäisches<br>Patentamt<br>European<br>Patent Office<br>Office européen<br>des brevets | **EUROPEAN SEARCH REPORT** | Application Number<br>EP 20 20 3142 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| Y | MODERATOR (LG ELECTRONICS): "Summary#1 of email thread [102-e-NR-eMIMO-02]", 3GPP DRAFT; R1-2007007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG1, no. e-Meeting; 20200817 - 20200828<br>17 August 2020 (2020-08-17), XP051921586, Retrieved from the Internet: URL:https://ftp.3gpp.org/tsg_ran/WG1_RL1/TSGR1_102-e/Docs/R1-2007007.zip R1-2007007 eMIMO_02 summary_v0.docx<br>[retrieved on 2020-08-17]<br>* pages 1-3 * | 12 | |

----

TECHNICAL FIELDS
SEARCHED (IPC)

The present search report has been drawn up for all claims

| Place of search | Date of completion of the search | Examiner |
|---|---|---|
| Munich | 29 April 2021 | Franz, Volker |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**Application Number**

EP 20 20 3142

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 20 20 3142

The Search Division considers that the present European patent application does not comply with the requirements of unity of invention and relates to several inventions or groups of inventions, namely:

1. claims: 1-5(completely); 13(partially)

   The setting(s) for the transmission of said UL channel(s) and/or resources and the reception of said one or more DL channel(s) and/or resource(s) is/are obtained from the QCL setting(s) in the active TCI state with the lowest identity, ID, in an active DL Bandwidth Part, BWP, of a CC.

   ---

2. claims: 6-12, 14, 15(completely); 13(partially)

   A method performed by a User Equipment, UE, the method comprising:- receiving, from a network node, a single explicit indication for at least one bandwidth part of at least one CC, wherein the indication provides:- one or more receive setting(s) for at least two DL channels, or one DL channel and one DL resource, or two DL resources, or- one or more transmit setting(s) for at least two UL channels, or one UL channel and one UL resource, or two UL resources, or- one or more transmit setting(s) for at least one DL channel and/or resource and one or more receive setting(s) for at least one UL channel and/or resource; wherein the setting(s) for said UL and/or DL channel(s) and/or resource(s) are received, from the network node, via one or more TCI configuration(s) in the received single explicit indication, wherein a TCI configuration provides at least one reference RS or at least one reference resource along with an indication of transmission and/or reception parameter(s) to be derived or obtained from each one of the RS(s) or the reference resources(s) provided by the TCI configuration(s), and- applying said setting(s) provided in the single explicit indication for the reception of said DL channel(s) and/or resource(s), and/or for the transmission of said UL channel(s) and/or resource(s).

   ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3GPP; TSG RAN; NR; Physical channels and modulation (Rel. 16). *3GPP TS 38.211 V16.0.0,* January 2020
- 3GPP; TSG RAN; NR; Multiplexing and channel coding (Rel. 16). *3GPP TS 38.212 V16.0.0,* January 2020
- 3GPP; TSG RAN; NR; Physical layer procedures for control (Rel. 16). *3GPP TS 38.213 V16.0.0,* January 2020
- 3GPP; TSG RAN; NR; Physical layer procedures for data (Rel. 16). *3GPP TS 38.214 V16.0.0,* January 2020
- 3GPP; TSG RAN; NR; Medium Access Control (MAC) protocol specification (Rel. 15). *3GPP TS 38.321 V15.8.0,* January 2020
- 3GPP; TSG RAN; NR; Radio Resource Control (RRC); Protocol specification (Rel. 15). *3GPP TS 38.331 V15.8.0,* January 2020
- 3GPP; TSG RAN; User Equipment (UE) radio transmission and reception; Part 1: Range 1 Standalone (Rel. 16). *3GPP TS 38.101-1 V16.2.0,* January 2020
- 3GPP; TSG RAN; User Equipment (UE) radio transmission and reception; Part 2: Range 2 Standalone (Rel. 16). *3GPP TS 38.101-2 V16.2.0,* January 2020